# EUROPÄISCHE PATENTSCHRIFT

(11) **EP 2 639 464 B1**
(45) Veröffentlichungstag und Bekanntmachung des Hinweises auf die Patenterteilung: **29.04.2015**
(21) Anmeldenummer: 13163814.0
(22) Anmeldetag: 24.06.2010
(51) Int. Cl.: F16C 11/06, F16J 3/04, F16C 7/02

(54) **Kugelgelenk mit Balgdichtung**
Ball joint with bellow seal
Articulation à billes avec soufflet

(30) Priorität: 30.06.2009 DE 102009031738; 30.06.2009 DE 102009031289; 30.06.2009 DE 102009031290; 30.06.2009 DE 102009031284; 30.06.2009 DE 102009031283
(43) Veröffentlichungstag der Anmeldung: 18.09.2013
(62) Teilanmeldung aus: 10742403.8
(73) Patentinhaber: TRW Automotive GmbH, 73553 Alfdorf (DE)
(72) Erfinder: Forthaus, Uwe, 40223 Düsseldorf (DE); Paul, Alexander, 47906 Kempen (DE); Mette, Ulrich, 45289 Essen (DE); Walter, Harald, 47179 Duisburg (DE)
(74) Vertreter: Prinz & Partner mbB

(56) Entgegenhaltungen:
- EP-A1- 0 612 926
- EP-A1- 0 999 372
- EP-A2- 0 971 138
- DE-A1-102006 013 046
- US-A1- 2006 193 681

## Beschreibung

Die Erfindung betrifft ein Kugelgelenk, das sich insbesondere zur Verwendung im Fahrwerksbereich eines Kraftfahrzeugs eignet.

Im Stand der Technik sind zahlreiche Kugelgelenke für Kraftfahrzeuge bekannt. Solche Kugelgelenke bestehen üblicherweise aus einem Kugelzapfen, der in einer Gelenkschale aus Kunststoff beweglich gelagert ist, einem Gehäuse und einem Abdichtsystem, das vor Eindringen von Schmutz schützt und das Austreten von Schmiermittel verhindert. Kugelzapfen und Gelenkschale werden in axialer Richtung in das Gehäuse gefügt und mechanisch mit dem Gehäuse verbunden. Durch die axiale Montagekraft wird die Kunststoffschale im Gehäuse axial bzw. radial vorgespannt, was für die Gelenkfunktion notwendig ist. In dieser Weise können kundenspezifizierte Bewegungsmomente, Federwege und vorgegebene Elastizitäten eingehalten werden.

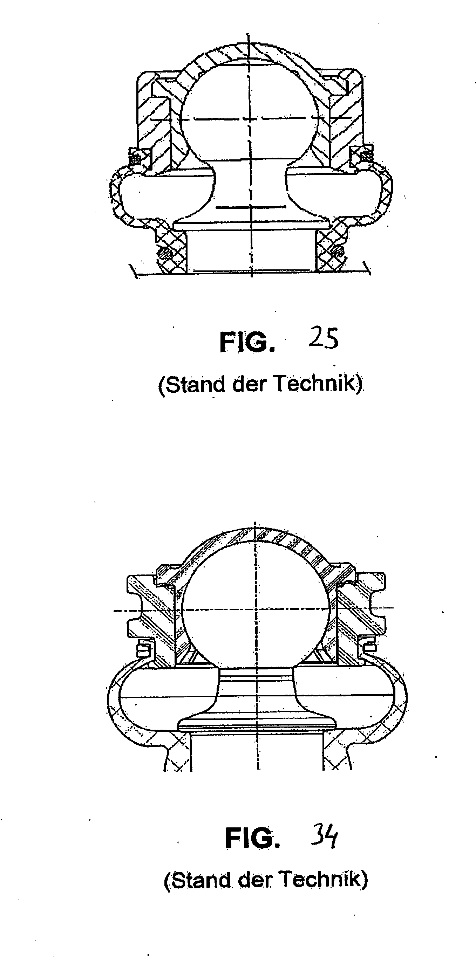

Die Kugelgelenkschale wird zumeist durch Umformen einer Gehäusekante (z.B. Rollierwalzen einer Walzkante) mechanisch mit dem Gehäuse verbunden. Diese Walzkante wird entweder direkt auf die Gelenkschale geformt oder auf einen Verschlussdeckel bzw. Verschlussring, der die Abdichtung unterstützt und die mechanische Separationskraft der Schale vom Gehäuse erhöht. Diese Schalenfüge- und Gelenkverschlusstechnik ist seit vielen Jahren bewährt. Jedoch unterliegt diese Technik dem Nachteil, dass eine Bearbeitung der Gehäuse erforderlich ist. Hinzu tritt, dass das Verschlussverfahren eine spezielle Rollierwalzmaschine erfordert, in Verbindung mit einer entsprechenden Montagezeit für das Rollierwalzen. Ein Kugelgelenk, bei dem die Walzkante des Verschlussdeckels rolliert ist, ist in Fig. 25 dargestellt.

Kugelgelenke für Kraftfahrzeuge werden mittels eines Dichtungsbalges bzw. einer Dichtungsmanschette gegen Eindringen von Schmutz und Feuchtigkeit bzw. gegen Austreten von Gelenkfett geschützt. Hierbei treten zwei Abdichtbereiche auf: Einerseits an der Verbindung des Dichtungsbalges zum Gehäuse (Festsitz des Dichtungsbalges), im folgenden als "gehäuseseitige Dichtung" bezeichnet, und andererseits an der Verbindung des Dichtungsbalgs zum Kugelzapfen (an der sich der Balg drehend auf dem Kugelzapfen bewegt), im folgenden als "zapfenseitige Dichtung" bezeichnet. Bei den heute üblichen Anwendungen kommen zur beidseitigen Befestigung des Dichtungsbalgs am Gehäuse und am Kugelzapfen Spannringe zum Einsatz, mittels der die gewünschte Dichtwirkung zwischen Dichtungsbalg und Gehäuse bzw. Kugelzapfen erreicht wird. Diese Kombination ist wegen der vergleichsweisen hohen Herstellungskosten nachteilig.

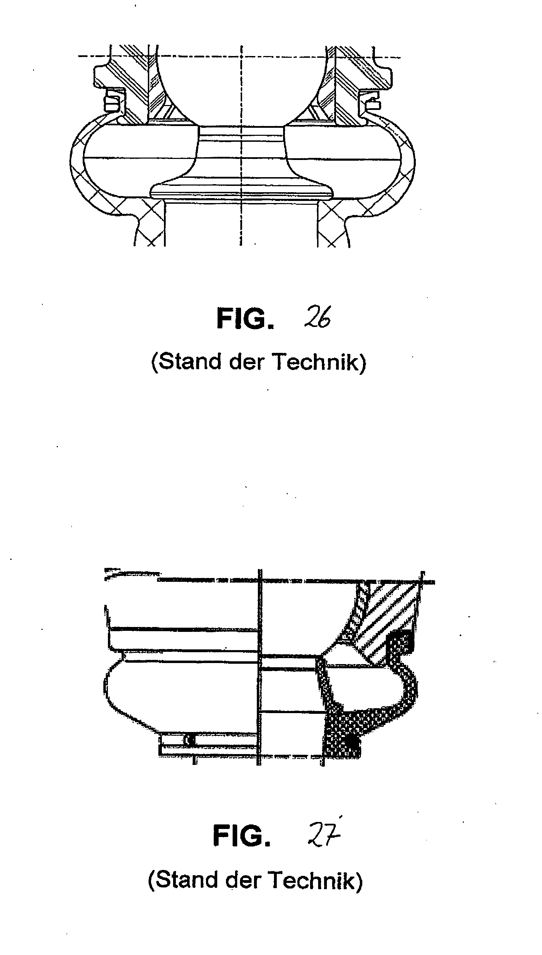

Die Anbindung eines Dichtungsbalgs am Gehäuse erfolgt heute standardmäßig über eine am Gehäuse angebrachte Balgnut, in der der Dichtungsbalg konturkonform positioniert wird. Eine solche Anbindung ist z.B. aus DE 199 00 072 C2 bekannt und in Fig. 26 in einer Querschnittsansicht gezeigt. Der Anpressdruck, der für die Abdichtleistung erforderlich ist, wird durch ein Spannmittel (in der Regel ein Spannring) aufgebracht, um kundenspezifizierte Abdichtungstest zu erfüllen. Die in Fig. 26 gezeigte Anbindung des Dichtungsbalgs ist wegen des erforderlichen Spannrings und seiner Montage mit zusätzlichen Kosten verbunden.

Im Stand der Technik sind alternativ zur Anbindung gemäß Fig. 26 weitere Prinzipien bekannt, mit denen sich der Dichtungsbalg an dem Kugelzapfen bzw. am Gehäuse positionieren lässt. Fig. 27 zeigt eine Lösung mit im Dichtungsbalg integrierten Klemmringen, die einen Festsitz des Dichtungsbalg auf dem Gehäuse bzw. einen Dichtsitz an dem Kugelzapfen herstellen. Fig. 28 zeigt eine Lösung mit einem außen am Dichtungsbalg aufgebrachten Metallring, der durch Umformung kraftschlüssig mit dem Gehäuse verbunden wird. Schließlich ist in Fig. 29 eine Lösung mit einer spannmittelfreien gehäuseseitigen Abdichtung gezeigt, die den Dichtungsbalg zwischen Gelenkschale und Gehäuse einklemmt. Hierbei ist jedoch zwischen Dichtungsbalg und Gelenkschale keine form- oder kraftschlüssige Verbindung vorgesehen, so dass eine Vormontage von Dichtungsbalg und Gelenkschale nicht möglich ist.

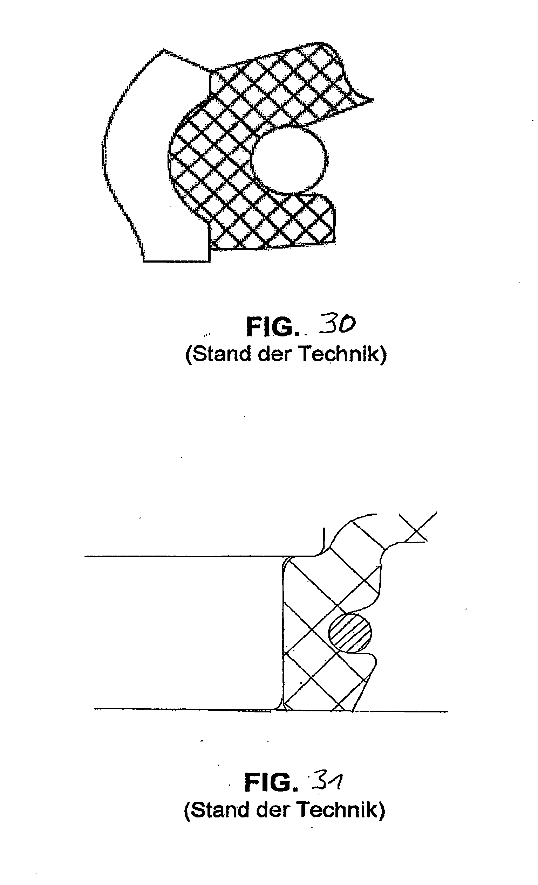

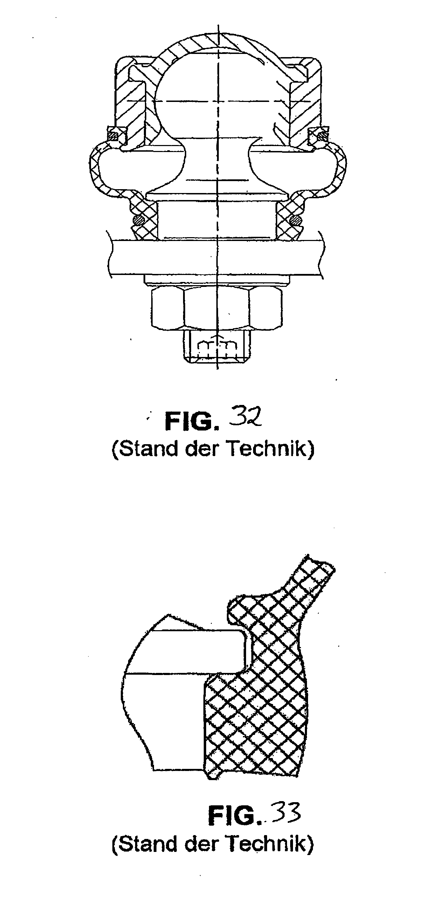

Die zapfenseitige Anbindung eines Dichtungsbalgs am Kugelzapfen erfolgt herkömmlich über einen unteren Rand des Dichtungsbalgs, genannt Balgmund, der in einer runden oder rechteckig ausgeführten Balgnut am Kugelzapfen positioniert wird. In Fig. 30 bzw. Fig. 31 ist eine runde bzw. rechteckig ausgeführte Balgnut eines Kugelzapfens in einer Teil-Querschnittsansicht gezeigt, wobei der Balgmund konturkonform zur Balgnut ausgeführt ist. Weiter ist es bekannt, dass die Balgnut zwischen einer Kugelzapfenbundkante und dem Montagegegenkörper ausgebildet sein kann, wie in der Querschnittsansicht von Fig. 32 gezeigt.

Der Anpressdruck, der für die Abdichtleistung des Dichtungsbalgs erforderlich ist, wird zum einem durch einen Presssitz aufgebracht, der durch ein Spannmittel (in der Regel ein Spannring, vgl. Fig. 30-32) unterstützt wird. Nachteilig hierbei ist, dass der Spannring und auch dessen Montage mit Kosten verbunden sind. Alternativ hierzu sind auch spannmittelfreie zapfenseitige Abdichtungen bekannt, wie in Fig. 33 gezeigt. Solche Systeme unterliegen jedoch den Nachteilen, dass sie bei stark ausgeführtem Presssitz zu einem Verdrillen des Balges bei Drehung und einer folgenden Balgzerstörung führen können, oder bei geringerem Presssitz eine nicht ausreichende Abdichtleistung zur Folge haben.

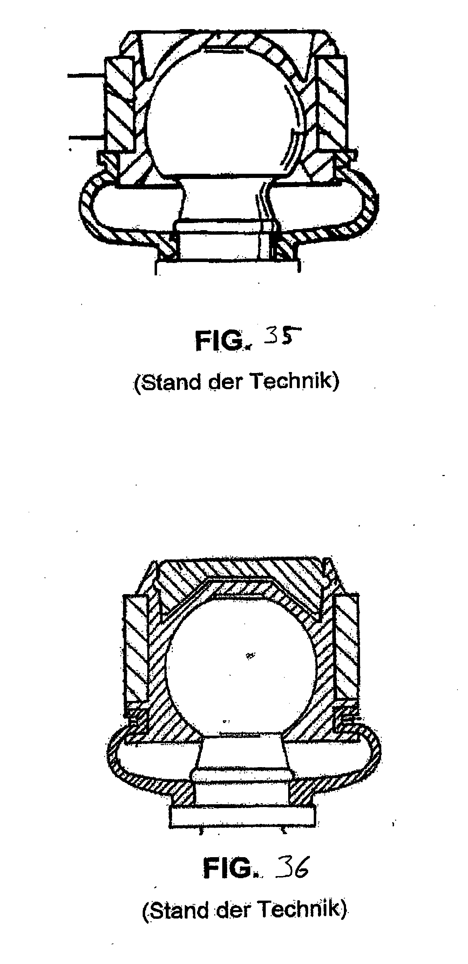

In den Fig. 34-36 sind weitere Kugelgelenke nach dem Stand der Technik dargestellt. Fig. 34 zeigt ein Kugelgelenk für eine aus GFK hergestellte Stabilisatorstrebe, bei der eine Gelenkschale in Form einer Kunststoffschale mit dem GFK-Gehäuse mittels Ultraschallschweißen stoffschlüssig verbunden ist. Weiterhin sind Gelenkschalen in Form von Kunststoffschalen bekannt, die ausschließlich über geeignete Schnapphaken im Gehäuse befestigt werden (Fig. 35), oder bei denen ein zusätzlicher Clip mechanisch mit den Schnapphaken verrastet wird (Fig. 36). Die in Fig. 35 gezeigte Kunststoffschale ist z.B. aus DE 198 23 781 C5 bekannt. Die in Fig. 36 gezeigte Kunststoffschale ist z.B. aus US 5,676,485 bekannt.

Gelenkeinrichtungen, insbesondere Kugelgelenke, können durch einen Strebenkörper mechanisch miteinander verbunden sein. Hierbei ist an beiden Enden eines solchen Strebenkörpers jeweils ein Kugelgelenk angebracht, wodurch zum Beispiel in einer Fahrwerksaufhängung eines Kraftfahrzeugs eine Gelenkverbindung zwischen zwei Punkten erzielt wird. Typische Anwendungen sind Stabilisatorstreben, die eine Verbindung zwischen Stabilisator und Radaufhängung bilden. Solche Streben werden auf Zug und Druck belastet und bestehen überwiegend aus Stahlstangen mit angeschweißten Gelenkgehäusen, Aluminiumschmiede- bzw. Druckgusskörpern oder Kunststoff mit Glasfaserverstärkung. Die Orientierung der Kugelgelenkzapfen und die Lastanforderungen sind jeweils kundenspezifisch, wobei eine Minimierung von Kosten und Gewicht bei maximaler Kraftübertragung angestrebt wird.

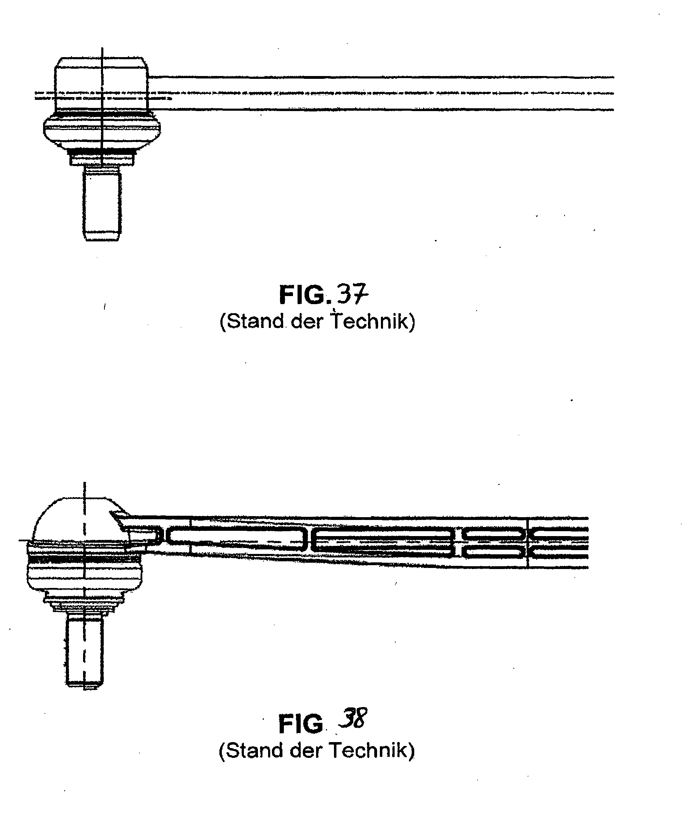

Herkömmliche Stahlausführungen (Fig. 37) für den vorstehend genannten Strebenkörper sind kostenintensiv und bestehen aus Vollstabmaterial mit kreisrundem Querschnitt und einem angeschweißtem Gelenkgehäuse. Sie erfordern eine hohe Fertigungstiefe auf Grund mechanischer Bearbeitung, des Schweißprozesses und der Beschichtung. Weitere Nachteile solcher Stahlstreben sind eine eingeschränkte Formgebung und ein relativ hohes Gewicht.

Im Stand der Technik sind Strebenkörper ebenfalls in Kunststoffausführung bekannt (Fig. 38), die kostengünstig sind und eine im Rahmen der Fertigungsbeschränkungen (z.B. Entformung) freie Formgebung besitzen. Das Grundmaterial ist leichter und die gesamte Struktur kann auf die Lastanforderungen (Zug-/ Drucklast) angepasst werden. Nachteilig sind ein deutlich höherer Bauraumbedarf (Durchmesser des Querschnittsprofils), geringere Struktursteifigkeit, sowie ein starker Einfluss durch hohe oder niedrige Temperaturen auf die Strukturfestigkeit.

Des Weiteren sind Strebenkörper in Aluminiumausführung bekannt, die zu den Kunststoffstreben vergleichbare Fertigungsbeschränkungen bzw. -optionen aufweisen. Vorteile sind das geringe Gewicht und die im Rahmen der Betriebstemperaturen unbeeinflusste Strukturfestigkeit. Die Struktursteifigkeit liegt deutlich über dem Kunststoffniveau, erreicht aber nicht die Werte einer Stahlausführung.

Aus US 2006/193681 A1 ist ein Kugelgelenk bekannt, das einen Dichtungsbalg mit einem gehäuseseitigen Dichtungssitz und einem zapfenseitigen Dichtungssitz in Form eines Balgmunds aufweist, wobei der Dichtungsbalg zwischen der Gelenkschale und dem Gelenkgehäuse eingeklemmt ist.

In EP 0 612 926 A1 ist ein Kugelgelenk beschrieben, das einen Dichtungsbalg und eine Gelenkschale umfasst, die in einem Gehäuse aufgenommen ist. Der Dichtungsbalg ist zwischen der Gelenkschale und dem Gehäuse eingeklemmt, wobei der Dichtungsbalg und die Gelenkschale eine Strukturierung aufweisen.

Aus EP 0 971 138 A2 ist ein Kugelgelenk bekannt, das einen Dichtungsbalg sowie eine Gelenkschale umfasst, die einen Kugelkopf des Kugelgelenks umgibt. Die Gelenkschale ist ferner in einem Gehäuse eingesetzt, wobei sie von einem injizierfähigen Material umgeben ist. Der Dichtungsbalg ist mit dem injizierfähigen Material verknüpft, das eine Ausnehmung in Form einer Nut aufweist, in die ein Verstärkungsring eingesetzt werden kann.

Die Aufgabe der Erfindung besteht darin, ein Kugelgelenk zu schaffen, das sich kostengünstig und unter Verkürzung der Montagezeit herstellen lässt und eine hohe Betriebssicherheit gewährleistet.

Diese Aufgabe wird durch ein Kugelgelenk mit den Merkmalen von Anspruch 1 gelöst. Vorteilhafte Weiterbildungen der Erfindung sind Gegenstand der abhängigen Patentansprüche.

Ein erfindungsgemäßes Kugelgelenk umfasst ein Gelenkgehäuse mit einer Ausnehmung, einen Kugelzapfen mit einem Kugelkopf, und einen Dichtungsbalg mit einem gehäuseseitigen Dichtungssitz und einem zapfenseitigen Dichtungssitz in Form eines Balgmundes, der in Kontakt mit dem Kugelzapfen gebracht werden kann, wobei ein Balgkörper des Dichtungsbalgs sich zwischen dem gehäuseseitigen Dichtungssitz und dem Balgmund erstreckt. Das Kugelgelenk umfasst weiter eine Gelenkschale, wobei der Kugelkopf schwenkbeweglich innerhalb der Gelenkschale aufgenommen und die Gelenkschale in der Ausnehmung des Gelenkgehäuses eingesetzt sind. Ein solches Kugelgelenk ist modular aufgebaut, wobei es in wenigen Schritten vollständig montiert werden kann.

Erfindungsgemäß weist die Gelenkschale außerdem einen Halteflansch auf, wobei der Dichtungsbalg an diesem Halteflansch befestigt ist. Dies bietet den Vorteil, vor der Montage der Gelenkschale in das Gelenkgehäuse eine Unterbaugruppe, bestehend aus Gelenkschale und Dichtungsbalg bilden zu können, wobei diese Unterbaugruppe dadurch erzeugt wird, dass der Dichtungsbalg an dem Halteflansch der Gelenkschale formschlüssig und weckmäßigerweise zusätzlich kraftschlüssig befestigt wird. Durch diese Befestigung des Dichtungsbalgs an dem Halteflansch wird der Montageprozess zur Herstellung des Kugelgelenks wesentlich vereinfacht und preiswerter, da die genannte Unterbaugruppe bereits im Vorfeld vorbereitet werden kann, und dadurch in Bezug auf Gelenkschale und Dichtungsbalg ein separates Handling bzw. ein aufwändiges Montieren enthält.

In vorteilhafter Weiterbildung der Erfindung kann der Halteflansch radial umlaufend ausgebildet sein. Dies gewährleistet eine sehr zuverlässige Anbindung des Dichtungsbalgs an den Halteflansch. Alternativ ist es auch möglich, den Halteflansch in mehreren voneinander getrennten Segmenten auszubilden, wodurch die Elastizität der Gelenkschale und damit ein Einknüpfen des Kugelkopfes des Kugelzapfens erleichtert wird.

Erfindungsgemäß ist an dem Halteflansch eine Erhebung und in einem Randbereich des Dichtungsbalgs eine Aussparung ausgebildet, wobei die Aussparung des Dichtungsbalgs und die Erhebung des Halteflansches miteinander verknüpft sind, wobei die Erhebung eine Hinterschneidung aufweist. Durch die genannte Verknüpfung der Aussparung mit der Erhebung ist eine formschlüssige Verbindung zwischen Dichtungsbalg und Halteflansch gegeben. Zweckmäßigerweise kann die Hinterschneidung der Erhebung kugelig, ballig oder winkelig ausgeführt sein. Da der Dichtungsbalg üblicherweise aus einem gummielastischen Material hergestellt ist, ist es ohne weiteres möglich, die Aussparung des Dichtungsbalgs in Eingriff mit der Erhebung des Halteflansches zu bringen.

In vorteilhafter Weiterbildung der Erfindung kann die Erhebung in gleicher Weise wie der Halteflansch und in Übereinstimmung mit diesem in Segmenten ausgebildet sein. Dies bietet Vorteile für die Herstellbarkeit der Gelenkschale dank einer besseren bzw. einfacheren Entformbarkeit aus dem Werkzeug, insbesondere dann, wenn die Erhebung eine Hinterschneidung aufweist. Abweichend hiervon ist es auch möglich, dass allein die Erhebung in segmentartigen Abschnitten ausgebildet ist, wodurch in gleicher Weise eine vereinfachte Entformbarkeit aus dem Werkzeug gewährleistet ist.

Ergänzend oder alternativ zu der genannten formschlüssigen Verbindung ist es des Weiteren möglich, den Dichtungsbalg mit dem Halteflansch form- bzw. stoffschlüssig zu verbinden. Dies kann geeignet durch Verwendung eines Klebstoffs und/oder durch Erzeugen einer stoffschlüssigen Verbindung erfolgen.

In vorteilhafter Weiterbildung der Erfindung kann der Dichtungsbalg an einer Seite entgegengesetzt zur Aussparung eine Anlagefläche aufweisen, an der eine Dichtlamellenstruktur ausgebildet ist. Bei vollständig montiertem Kugelgelenk wird diese Anlagefläche des Dichtungsbalgs gegen eine Gehäusefläche gepresst, woraus eine ausgezeichnete gehäuseseitige Gelenkabdichtung des montierten Kugelgelenks resultiert.

Die Vorteile der vorstehend genannten Varianten des Kugelgelenks unter Verwendung der Unterbaugaugruppe sind:
- form- und/oder kraftschlüssige Verbindung zwischen Dichtungsbalg und Gelenkschale, was die Bildung einer vormontierten Unterbaugruppe ermöglicht,
- Entfall eines zusätzlichen gehäuseseitigen Spannmittels,
- Erfüllung der Abdichtbedingungen kundenspezifizierter Lastenhefte, und
- Kostensenkung gegenüber herkömmlichen Abdichtsystemen.

In vorteilhafter Weiterbildung der Erfindung kann an einer dem Kugelkopf entgegengesetzten Außenseite der Gelenkschale zumindest ein Verrastungselement vorgesehen sein, das mit einem Rand der Ausnehmung des Gelenkgehäuses zusammenwirkt. Des Weiteren ist ein Sicherungselement vorgesehen, das im montierten Zustand des Kugelgelenks in Kontakt mit einer Innenumfangsfläche des Verrastungselements ist, so dass dadurch das Verrastungselement in Eingriff mit dem Rand der Ausnehmung des Gelenkgehäuses gehalten und somit die Gelenkschale gegen ein Verlieren aus der Ausnehmung des Gelenkgehäuses gesichert ist. Das Sicherungselement ist mit der Gelenkschale in deren Polbereich verbunden bzw. daran befestigt.

Das Sicherungselement stellt einen Sicherungs-Clip dar, der formschlüssig und/ oder stoffschlüssig mit der Gelenkschale verbunden ist. Durch diese Verbindung des Sicherungselements mit der Gelenkschale ist gewährleistet, dass das zumindest eine Verrastungselement betriebssicher in Eingriff mit dem Rand der Ausnehmung des Gelenkgehäuses gehalten wird, so dass ein unbeabsichtigtes Herauslösen der Gelenkschale aus dem Gelenkgehäuse des Kugelgelenks nicht möglich ist. Durch die Verbindung des Sicherungselements mit der Gelenkschale in deren Polbereich können eventuelle Toleranzen des Verrastungselements, die ansonsten zu einem Lösen des Sicherungselements von dem Verrastungselement führen könnten, ausgeglichen werden. Ein weiterer Vorteil der Verbindung des Sicherungselements mit der Gelenkschale besteht in einer deutlichen Erhöhung der Separationskräfte der Gelenkschale aus dem Gelenkgehäuse.

In vorteilhafter Weiterbildung der Erfindung kann die Gelenkschale einstückig aus Kunststoff hergestellt sein. Dies führt zu niedrigen Herstellungskosten und erlaubt einen hohen Integrationsgrad, wobei das Verrastungselement an die Gelenkschale angespritzt sein kann.

In vorteilhafter Weiterbildung der Erfindung kann die Gelenkschale eine geschlossene Mantelfläche aufweisen, insbesondere in ihrem Polbereich, in dem die Gelenkschale mit dem Sicherungselement verbunden ist. Die geschlossene Mantelfläche wirkt sich vorteilhaft auf die Dichtigkeit der Gelenkschale in ihrem Polbereich aus. Bei der Montage des Kugelgelenks ist ein Einknüpfen des Kugelkopfs eines Kugelzapfens in die Gelenkschale durch ihre elastischen Eigenschaften sichergestellt.

In vorteilhafter Weiterbildung der Erfindung kann die Gelenkschale im Polbereich einen abragenden Befestigungsstift aufweisen, der mit einer Ausnehmung des Sicherungselements in Eingriff gebracht werden können. Das Zusammenwirken dieses Befestigungsstifts mit der Ausnehmung gewährleistet einen stets zentrischen Sitz des Sicherungselements im Polbereich der Gelenkschale und erleichtert wesentlich den Montagevorgang für ein Kugelgelenk.

In vorteilhafter Weiterbildung der Erfindung kann der Befestigungsstift als Schnapphaken ausgebildet sein, der mit der Ausnehmung des Sicherungselements im montierten Zustand des Kugelgelenks verrastet ist. Das Sicherungselement ist mit einer entsprechenden Negativ-Kontur zum Schnapphaken ausgeführt. Der Schnapphaken verrastet das Sicherungselement in Form des Clips in seiner Position, wobei der Clip über seinen Außenrand das zumindest eine Verrastungselement der Gelenkschale in seiner Gehäusemontageposition an den Rand der Ausnehmung des Gelenkgehäuses verspannt. Die Ausbildung des Befestigungsstifts als Schnapphaken ist insoweit vorteilhaft, als dass nach dem Verrasten mit dem Sicherungselement keine weitere Nachbearbeitung erforderlich ist.

In vorteilhafter alternativer Ausführungsform der Erfindung kann der Befestigungsstift nach einer Montage des Sicherungselements an seinem freien Ende derart umgeformt werden, dass das Sicherungselement in seiner Position formschlüssig gesichert ist. Hierbei wird zunächst das Sicherungselement mit seiner Ausnehmung über den Befestigungsstift geführt, wobei eine anschließende Warm- oder Kaltumformung des freien Endes des Befestigungsstifts das Sicherungselement formschlüssig in seiner Position sichert. Zweckmäßigerweise kann hierbei der Befestigungsstift als Hohlzylinder ausgebildet sein, was die Umformung seines freien Endes erleichtert. Ergänzend und/oder alternativ kann der Befestigungsstift mit der Ausnehmung des Sicherungselements auch stoffschlüssig verbunden sein. Diese stoffschlüssige Verbindung kann zum Beispiel mittels Ultraschallschweißen oder Kleben hergestellt werden. Zusätzlich ist es möglich, den Außenrand des Sicherungselements stoffschlüssig mit einer Innenumfangsfläche des Verrastungselements stoffschlüssig zu verbinden, wozu sich ebenfalls das Ultraschallschweißen oder Kleben eignet.

In vorteilhafter Weiterbildung der Erfindung kann das Sicherungselement als Polkappe ausgebildet sein, die mit ihrer Kontur an den Polbereich der Gelenkschale angepasst ist. Einerseits erleichtert dies den Montagevorgang des Sicherungselements mit der Gelenkschale, andererseits ist dadurch ein gleichmäßiges Zusammenwirken bzw. Abstützen einer Mehrzahl von Verrastungselementen, die entlang des Umfangs der Gelenkschale angeordnete sein können, sichergestellt.

Die Vorteile der vorstehend genannten Varianten des Kugelgelenks sind:
- keine mechanische Bearbeitung des Gelenkgehäuses notwendig,
- wesentliche Vereinfachung des Montageprozesses, da eine Umformung des Gelenkgehäuses entfällt und die Montagezeit verkürzt werden kann,
- keine Veränderung des Korrosionsschutzes durch Umformprozesse (zum Beispiel Abplatzen von Oberflächenbeschichtungen),
- Montage der Gelenkschale in verschiedenen Gehäusematerialien möglich (zum Beispiel Stahl, GFK, Aluminium), und
- Erfüllung kundenspezifizierter Lastenhefte bezüglich Abdichtung, Gelenkfunktionen und mechanischer Festigkeiten und Separationskräfte

In vorteilhafter Weiterbildung der Erfindung kann der Balgmund bei verschiedenen Winkelstellungen des Kugelzapfens bezüglich einer Längsachse des Kugelgelenks mit im Wesentlichen konstantem Anpressdruck mit dem Kugelzapfen dichtend in Anlage gebracht werden. Dies verhindert ein unzulässiges Abheben des Balgmundes von dem Kugelzapfen und somit ein Eindringen von Feuchtigkeit, Schmutz oder dergleichen. Ein weiterer Vorteil besteht darin, dass ein ausreichender Anpressdruck, mit dem der zapfenseitige Dichtungssitz des Dichtungsbalgs an den Kugelzapfen gedrückt wird, auch dann gewährleistet ist, wenn kein Spannmittel für den Dichtungsbalg vorgesehen ist. Somit kann ein sonst üblicher zapfenseitiger Spannring entfallen. Des Weiteren ist stets eine sichere Positionierung des Balgmundes an dem Kugelzapfen bzw. in einer Nut desselben sichergestellt, nämlich sowohl bei der Montage des Kugelgelenks als auch in dessen Betrieb, wenn der Kugelzapfen Schwenkbewegungen bezüglich einer Längsachse des Kugelgelenks ausführt und/oder rotatorisch verdreht wird.

In vorteilhafter Weiterbildung der Erfindung ist die Anlagefläche des Balgmundes im entlasteten Zustand konkav ausgebildet, so dass sich bei montiertem Kugelgelenk eine federnde Kontaktanlage des Balgmundes mit dem Kugelzapfen ergibt. Bei großen Bewegungs- bzw. Verschwenkwinkeln des Kugelzapfens kommt es zu Kompressions- und Dekompressionswirkungen des Balgmundpresssitzes infolge von Zug- und Druckkräften im Balgkörper. Die genannte Federwirkung der Anlagefläche des Balgmundes wirkt diesen Störgrößen ausgleichend entgegen, so dass im Vergleich zu einem Standardbalgmund eine Anpresskraft und Dichtleistung über einen größeren Kraftbereich sichergestellt ist.

In vorteilhafter Weiterbildung der Erfindung kann der Balgkörper in einem Bereich entgegengesetzt zur Anlagefläche mit dem Kugelzapfen eine axiale Abstreiflippe aufweisen. Eine solche Abstreiflippe verhindert in erster Näherung das Eindringen von Schmutz und Feuchtigkeit in das Innere des Kugelgelenks.

In vorteilhafter Weiterbildung der Erfindung sind der Balgkörper und der Balgmund derart miteinander verbunden, dass eine Kraft- und Bewegungsübertragung zwischen diesen beiden Elementen zumindest vermindert ist. Dies führt dazu, dass eine Kraft bzw. eine Bewegung in zumindest reduziertem Maße von dem Balgkörper auf den Balgmund übertragen werden. Zweckmäßigerweise kann eine solche Verbindung zwischen Balgkörper und Balgmund dadurch geschaffen werden, dass der Balgkörper an dem Balgmund im Wesentlichen im Bereich dessen axialer Mitte angebracht ist. Dies führt bei einer Zugkraft im Balgkörper zu einer reduzierten Kraft in dem Balgmund und damit zu einer gleichmäßigen Reduzierung der Anpresskraft des Balgmundes über seine axiale Höhe, ohne dass es dabei - auch bei großen Bewegungs- bzw. Verschwenkwinkeln des Kugelzapfens - zu einer einseitigen Ablösung des Balgmundes vom Kugelzapfen kommt.

In vorteilhafter Weiterbildung der Erfindung kann ein Übergangsbereich zwischen dem Balgkörper und dem Balgmund einen verminderten Querschnitt aufweisen. Hierdurch wird die Verminderung der Kraft- und Bewegungsübertragung zwischen Balgkörper und Balgmund erzielt. Die gleiche Wirkung kann dadurch erzielt werden, wenn der Balgkörper zumindest eine Einkerbung aufweist. Eine solche Einkerbung erfüllt die Funktion einer Nut und reduziert ebenfalls die Kraft- und Bewegungsübertragung des Balgkörpers auf den Balgmund. Anders ausgedrückt, werden infolge dessen die Zugkräfte, die durch eine Bewegung des Balgkörpers entstehen, nur in reduziertem Maße auf den Balgmund übertragen, so dass die Anpresskraft, mit der der Balgmund an den Kugelzapfen gedrückt wird, gleichmäßig über die Balgmundhöhe verteilt bleibt. Die Wirkung einer solchen Einkerbung wird weiter dadurch verbessert, dass sie beidseitig in dem Balgkörper ausgebildet ist. Eine noch weitere Verbesserung wird dadurch erreicht, dass der Balgkörper eine Mehrzahl von Einkerbungen aufweist, die nach Art einer Reihenschaltung hintereinander bzw. angrenzend zueinander vorgesehen sind. Hierdurch wird die gewünschte Verminderung der Kraft- und Bewegungsübertragung des Balgmundes auf den Balgkörper nochmals verbessert.

In vorteilhaftere Weiterbildung der Erfindung kann die zumindest eine Einkerbung radial außerhalb der Querschnittsverminderung zwischen Balgmund und Balgkörper vorgesehen sein. Dies führt vorteilhaft zu einer Überlagerung der Wirkung der Einkerbung und der Querschnittsverminderung und somit im Ergebnis zu einer weiter verbesserten Verminderung der Kraft- und Bewegungsübertragung zwischen Balgkörper und Balgmund.

In vorteilhafter Weiterbildung der Erfindung kann der Balgkörper zumindest eine radiale Falte aufweisen. Hierunter ist zu verstehen, dass der Balgkörper in axialer Richtung mehrere Segmente mit verschiedenem Durchmesser aufweist. Bei Schwenk- bzw. Kippbewegungen des Kugelzapfens um seine Längsachse hat dies den Vorteil, dass der Balgkörper genügend "Reserven" aufweist, so dass die auf dem Balgmund wirkenden Zugspannungen ein bestimmtes Maß nicht überschreiten. Alternativ und/oder ergänzend kann der Balgkörper auch zumindest eine axiale Falte aufweisen. Hierunter ist zu verstehen, dass der Balgkörper in radialer Richtung mehrere Segmente mit unterschiedlicher axialer Höhe aufweist. Die Wirkung einer solchen axialen Falte ist die gleiche wie bei der vorstehend genannten radialen Falte, nämlich eine Verminderung der auf den Balgmund wirkenden Zugspannung.

Die Vorteile der vorstehend genannten Varianten des Kugelgelenks unter Verwendung des Dichtungsbalgs sind:
Nahezu konstanter Anpressdruck des Balgmundes am Kugelzapfen, auch bei großen Bewegungswinkeln des Kugelgelenks,
Die Abdichtung zwischen Balgmund und Kugelzapfen ist auch ohne Spannring gewährleistet,
Sichere Positionierung des Balgmunds in einer Kugelzapfen-Nut, nämlich sowohl während einer Montage des Kugelgelenks als auch in dessen Betrieb, insbesondere bei großen Gelenkbewegungen,
Kostensenkung gegenüber herkömmlichen Abdichtbalgsystemen.

Das erfindungsgemäße Kugelgelenk kann mit einem weiteren Kugelgelenk durch einen Strebenkörper mechanisch verbunden sein. Somit bilden diese beiden Kugelgelenke ein System bestehend aus zwei Kugelgelenken. Der genannte Strebenkörper weist einen Profilquerschnitt auf, der innerhalb eines Hüllkreises angeordnet ist und eine Vertikalachse und eine Horizontalachse aufweist, wobei innerhalb der Horizontalachse eine erste Anzahl von Erhebungen und unterhalb der Horizontalachse eine zweite Anzahl von Erhebungen ausgebildet sind. Hierbei ist die erste Anzahl von Erhebungen größer als die zweite Anzahl von Erhebungen. Ein solcher Strebenkörper bewirkt ein optimales Verhältnis zwischen Struktursteifigkeit und minimalem Gewicht, auf Grundlage eines geringen Querschnittsprofildurchmessers und einer maximalen Kraftübertragung in Stablängsrichtung ohne plastische Deformation. Des Weiteren lässt sich ein solcher Strebenkörper einfach und günstig infolge einer geringen Fertigungstiefe herstellen, wobei keine Nachbearbeitung erforderlich ist. Überdies zeichnet sich ein solcher Strebenkörper durch eine ausgezeichnete statische und dynamische Struktursteifigkeit bei allen Betriebstemperaturen aus. Insoweit stellt ein solcher Strebenkörper eine zuverlässige mechanische Verbindung zwischen zwei Punkten dar, die z.B. jeweils aus einer Gelenkeinrichtung in Form eines Kugelgelenks gebildet sein können.

In vorteilhafter Weiterbildung der Erfindung kann der Strebenkörper oberhalb seiner Horizontalachse drei Erhebungen und unterhalb seiner Horizontalachse zwei Erhebungen aufweisen. Hierdurch ist der genannte kompakte Querschnittsprofildurchmesser gewährleistet mit gleichzeitig ausgezeichneter Festigkeit. Alternativ hierzu ist es auch möglich, dass oberhalb der Horizontalachse mehr oder weniger als drei Erhebungen ausgebildet sind. Gleiches gilt auch für den Bereich unterhalb der Horizontalachse, in dem mehr oder weniger als zwei Erhebungen ausgebildet sein können.

In vorteilhafter Weiterbildung der Erfindung kann der Profilquerschnitt des Strebenkörpers bezüglich seiner Vertikalachse symmetrisch ausgebildet sein. Dies wirkt sich vorteilhaft auf die strukturmechanischen Eigenschaften aus.

In vorteilhafter Weiterbildung der Erfindung kann der Profilquerschnitt des Strebenkörpers entlang seiner Länge im Wesentlichen konstant ausgebildet sein. In Abhängigkeit vom jeweiligen Einsatzzweck kann dies den auftretenden Belastungen vollauf genügen, wobei der Herstellungsprozess durch den konstanten Querschnitt vereinfacht ist. Alternativ kann der Profilquerschnitt entlang einer Längserstreckung des Strebenkörpers auch veränderlich ausgeführt sein, so dass eine Krümmung des Strebenkörpers aufgrund des veränderlichen Biegemomentverlaufs bei Druckbelastung und entsprechend die Druckbeständigkeit bezüglich Knicken optimiert wird. Des Weiteren kann der Strebenkörper entlang seiner Länge verschiedene Abschnitte aufweisen, die sowohl einen konstanten Profilquerschnitt als auch einen veränderlichen Profilquerschnitt aufweisen. Dies bietet Vorteile bezüglich der Optimierung der mechanischen Eigenschaften des Strebenkörpers für einen spezifischen Lastfall.

In vorteilhafter Weiterbildung der Erfindung kann der Flächenschwerpunkt des Strebenkörpers bezüglich seiner Position zur Horizontalachse konstant oder auch veränderlich sein. Durch eine geänderte Position des Flächenschwerpunkts bezüglich der Horizontalachse lässt sich die Biegelinie des Strebenkörpers bei einer Druckbelastung optimal gestalten.

Aufgrund der verschiedenen Erhebungen des Strebenkörpers, die innerhalb des Hüllkreises vorgesehen sind, ergibt sich zumindest eine so genannte Profilsenke an der Außenumfangsfläche des Strebenkörpers. Eine solche Profilsenke kann entweder geschlossen ausgebildet sein, wodurch der Herstellungsprozess vereinfacht ist. Alternativ kann diese Profilsenke auch durch Rippen versteift sein, was zu einer verbesserten Struktursteifigkeit des Strebenkörpers führt. Anders ausgedrückt, kann der Strebenkörper an seiner Außenumfangsfläche und innerhalb des Hüllkreises mit zumindest einer Rippe versehen sein, die vorzugsweise im Bereich der Profilsenke ausgebildet ist.

In vorteilhafter Weiterbildung der Erfindung ist an zumindest einem freien Ende des Strebenkörpers ein Übergangsbereich vorgesehen, der einen Anbindungsbereich für einen Kinematikpunkt bildet. Ein solcher Kinematikpunkt ist dahingehend zu verstehen, dass hierdurch eine Montage bzw. Anbindung eines weiteren Bauteils möglich ist, z.B. eine Gelenkeinrichtung in Form eines Kugelgelenks, eines Elastomergelenks oder dergleichen.

Zweckmäßigerweise ist dieser Übergangsbereich in Form eines zylindrischen Abschnitts ausgebildet, so dass die Winkelstellung dieses Anbindungsbereichs von dem Profilquerschnitt des Strebenkörpers entkoppelt sein kann.

In vorteilhafter Weiterbildung der Erfindung kann an beiden freien Enden des Strebenkörpers jeweils ein Übergangsbereich in Form eines zylindrischen Abschnitts ausgebildet sein. Aufgrund der zylindrischen Ausbildung der beiden Übergangsbereiche lässt sich deren Winkelstellung relativ zueinander unter Berücksichtigung der Entformungsrichtung des Strebenprofils definiert ausgestalten, so dass die Anbindungsbereiche an beiden Enden des Strebenkörpers relativ zueinander einen Winkel zwischen 0° und 180° einschließen können.

In vorteilhafter Weiterbildung der Erfindung kann der Strebenkörper im Druckguss-Verfahren, zum Beispiel Aluminium-Druckguss, hergestellt werden. Dies ermöglicht eine kostengünstige Herstellung einschließlich aller geometrischen Detailkonturen, ohne dass eine mechanische Nachbearbeitung oder Beschichtung erforderlich ist. Das Druckguss-Verfahren hat den weiteren Vorteil, dass sich damit die Bildung von Lufteinschlüssen bzw. Lunkern während des Gießprozesses verhindern oder zumindest vermindern lassen.

In vorteilhafter Weiterbildung der Erfindung kommt der Strebenkörper insbesondere im Fahrzeugbau zum Einsatz, insbesondere bei Fahrwerkskomponenten, zum Beispiel als Stabilisatorstrebe oder dergleichen.

Die Erfindung ist nachfolgend anhand einer Ausführungsform in der Zeichnung schematisch dargestellt und wird unter Bezugnahme auf die Zeichnung ausführlich beschrieben.

Es zeigen:

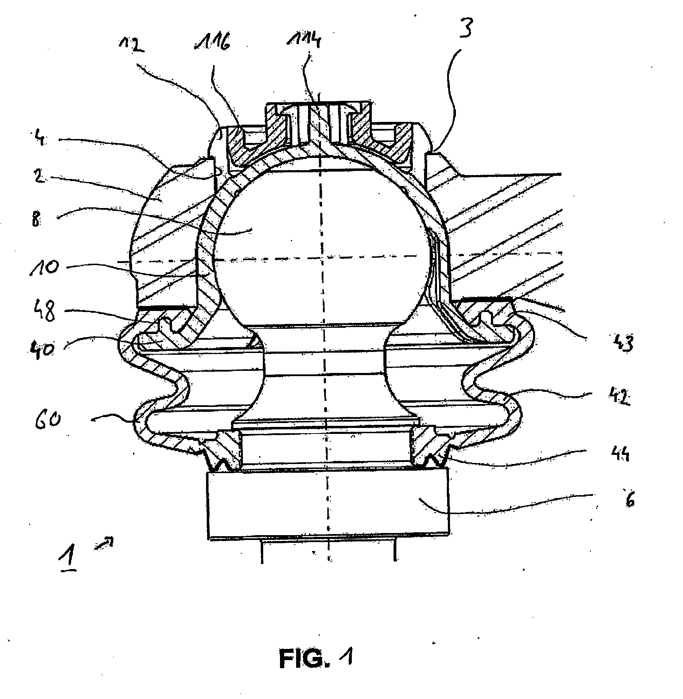

Figur 1 eine Querschnittsansicht eines erfindungsgemäßen Kugelgelenks in vollständig montiertem Zustand,

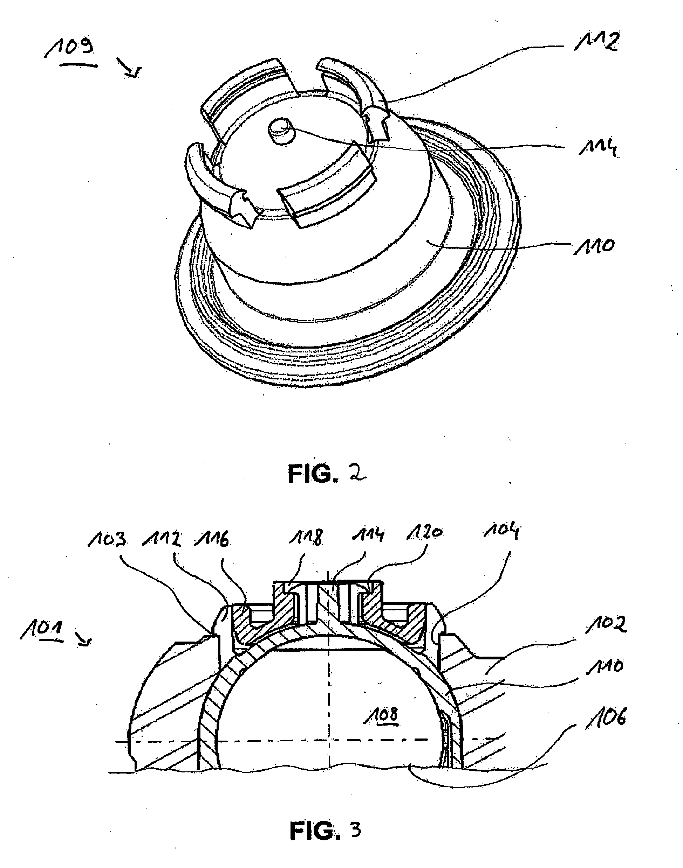

Figur 2 eine perspektivische Ansicht einer Gelenkschale für das Kugelgelenk von Figur 1,
Figur 3 eine Teil-Querschnittsansicht der Gelenkschale von Figur 2, im zusammengebauten Zustand des Kugelgelenks,

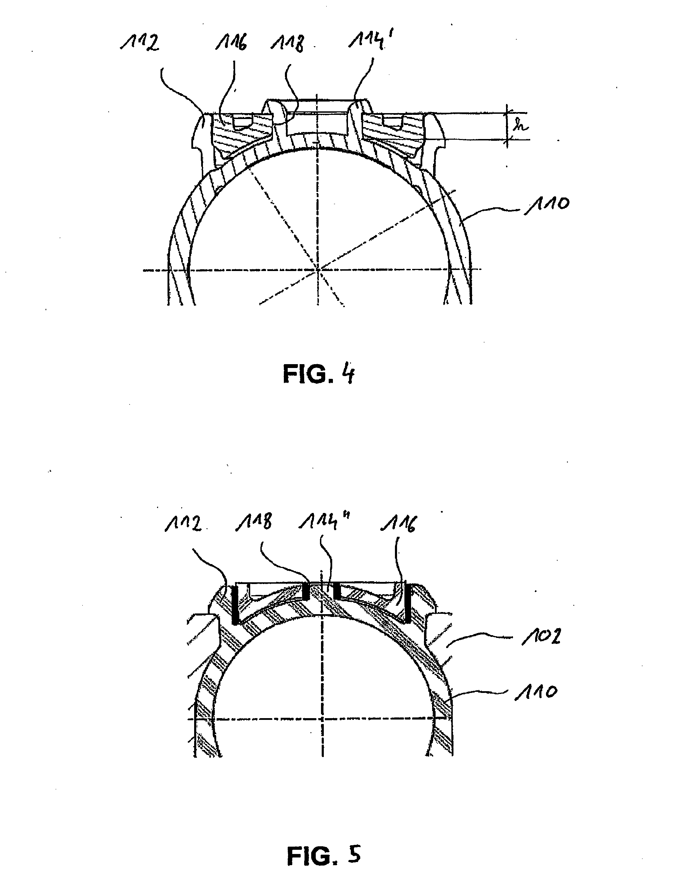

Figur 4 eine Teil-Querschnittsansicht einer alternativen Ausführungsform für eine Gelenkschale,
Figur 5 eine Teil-Querschnittsansicht einer alternativen Ausführungsform für eine Gelenkschale,

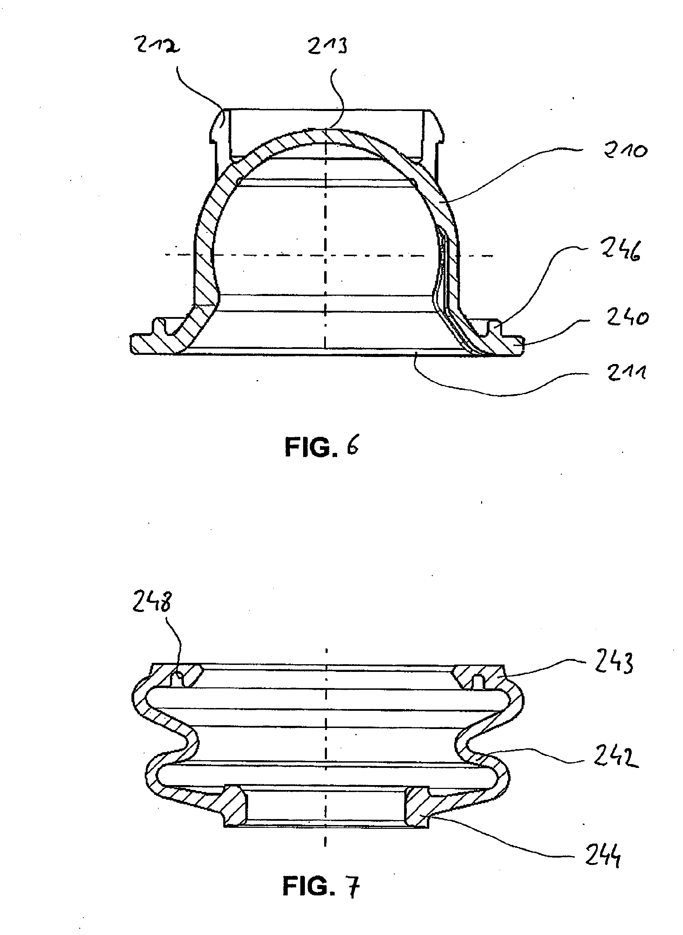

Figur 6 eine Querschnittsansicht der Gelenkschale von Figur 2,
Figur 7 eine Querschnittsansicht eines Dichtungsbalgs,

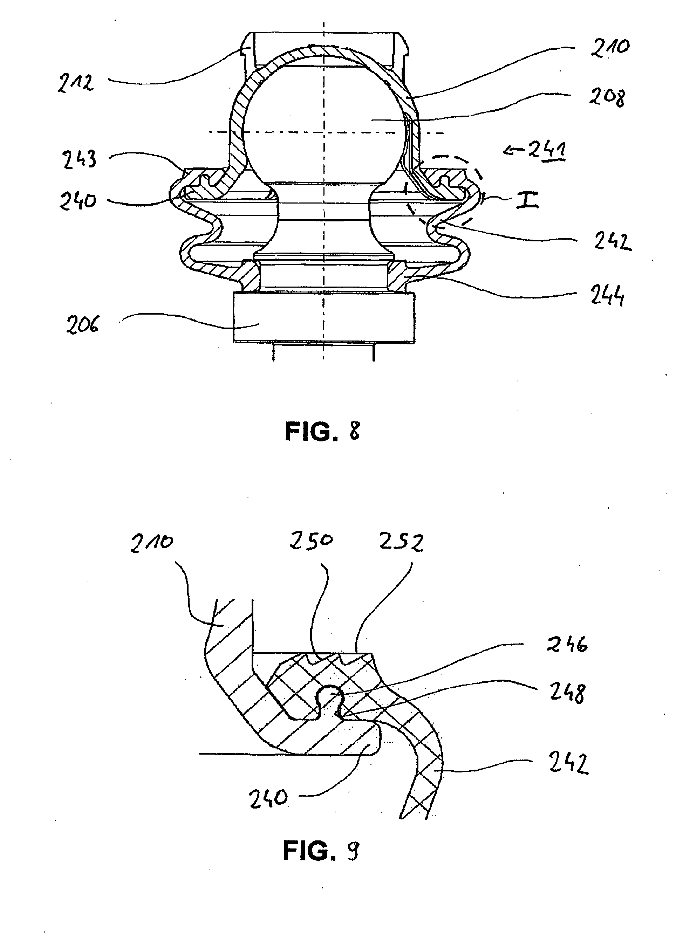

Figur 8 eine Querschnittsansicht einer Lagerungs- und Dichtungsbaugruppe zur Verwendung für ein Kugelgelenk von Figur 1, wobei der Dichtungsbalg von Figur 7 an einem Halteflansch der Gelenkschale von Figur 6 befestigt ist,
Figur 9 den Bereich I von Figur 8 in einer vergrößerten Ansicht,

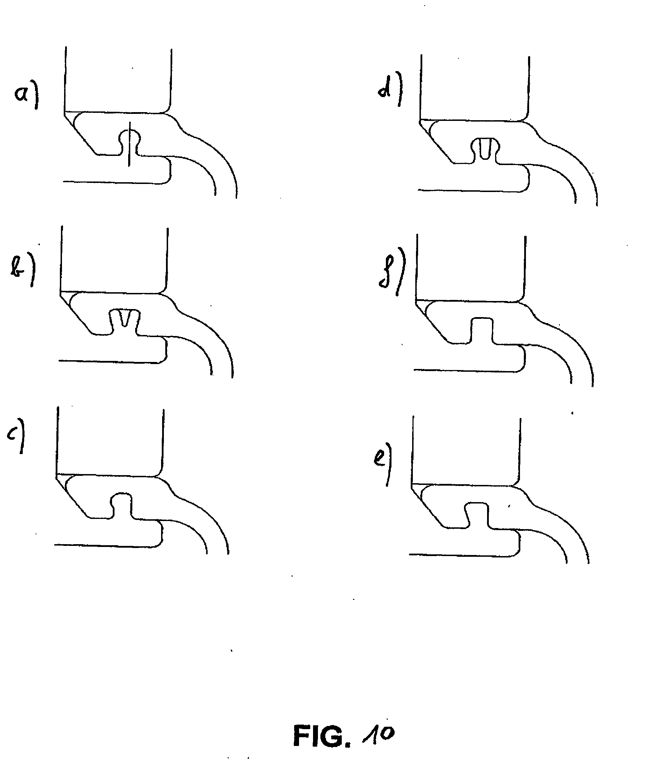

Figur 10 prinzipiell vereinfachte Darstellungen für ein Verknüpfen des Dichtungsbalgs von Figur 7 mit dem Halteflansch der Gelenkschale von Figur 6, wobei die Ausbildung f) nicht die Hinterschneidung gemäß Anspruch 1 zeigt.

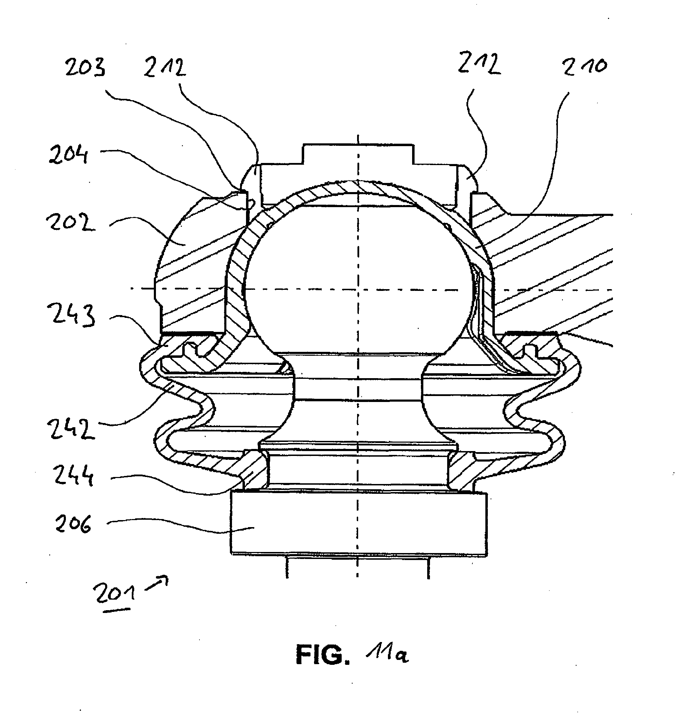

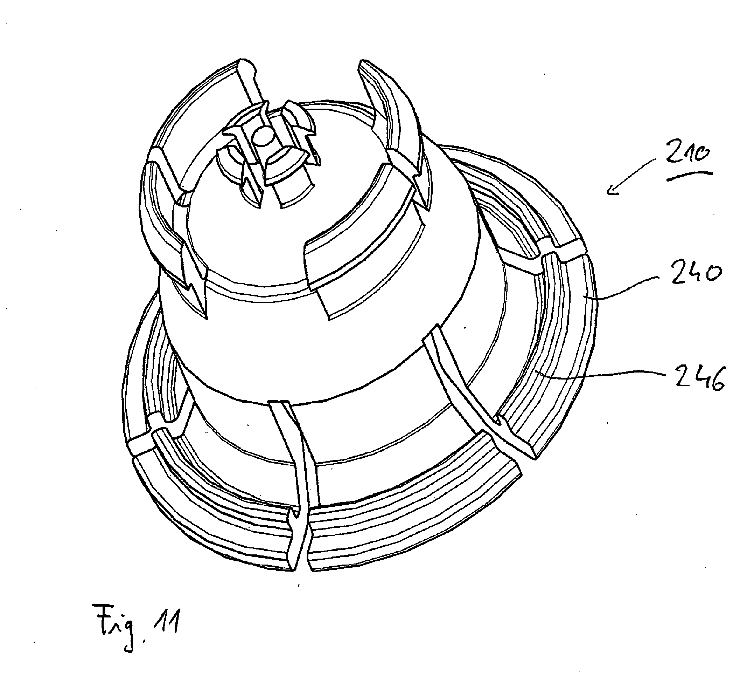

Figur 11a eine Querschnittsansicht eines erfindungsgemäßen Kugelgelenks in vollständig montiertem Zustand gemäß einer weiteren Ausführungsform,
Figur 11-13 Perspektivansichten von weiteren Ausführungsformen einer Gelenkschale,

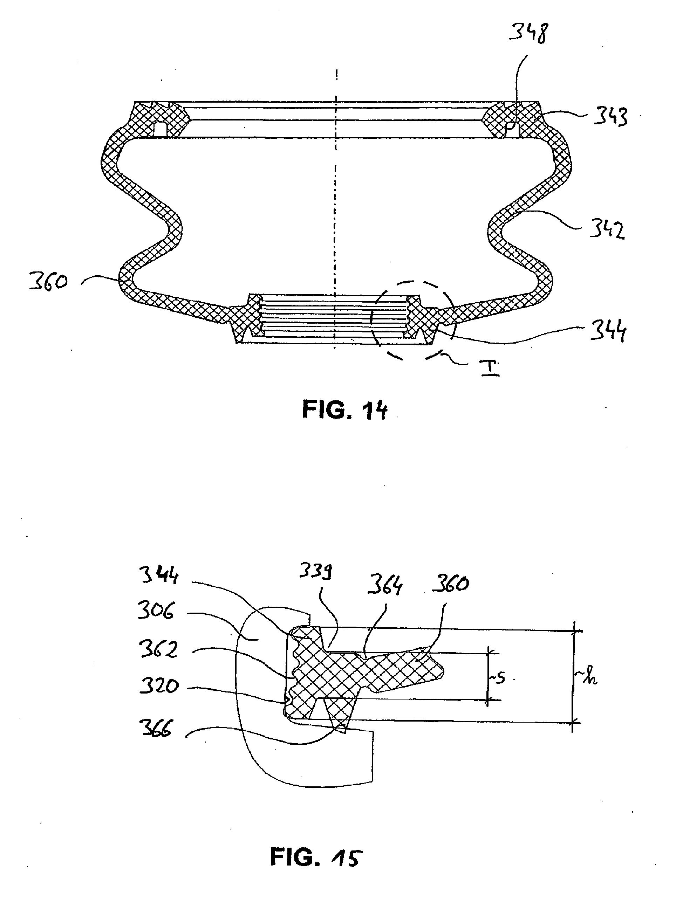

Figur 14 eine weitere Querschnittsansicht des Dichtungsbalgs von Figur 7,
Figur 15 den Bereich I von Figur 14 in vergrößerter Darstellung,

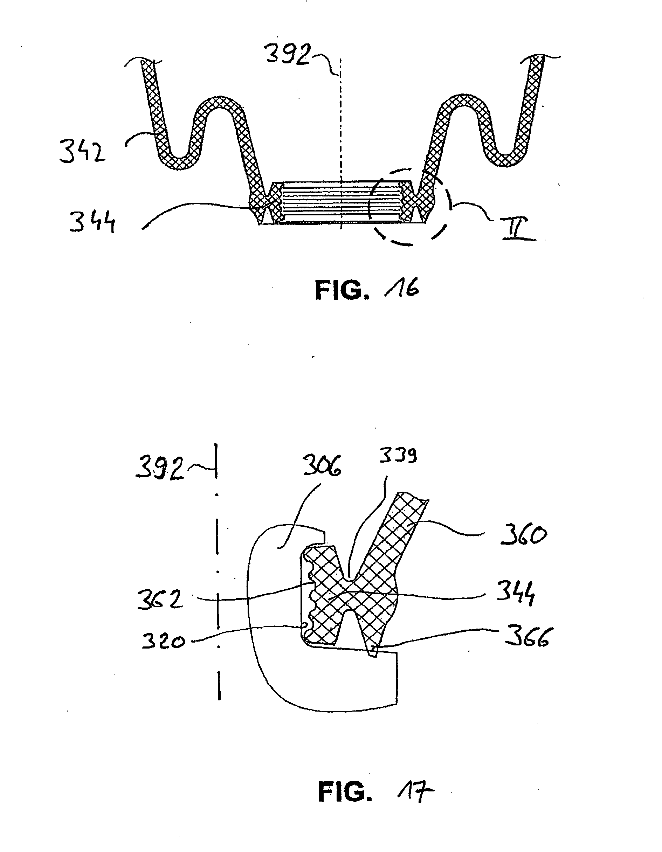

Figur 16 eine Querschnittsansicht eines Teils eines Dichtungsbalgs nach einer weiteren Ausführungsform,
Figur 17 den Bereich II von Figur 16 in vergrößerter Darstellung,

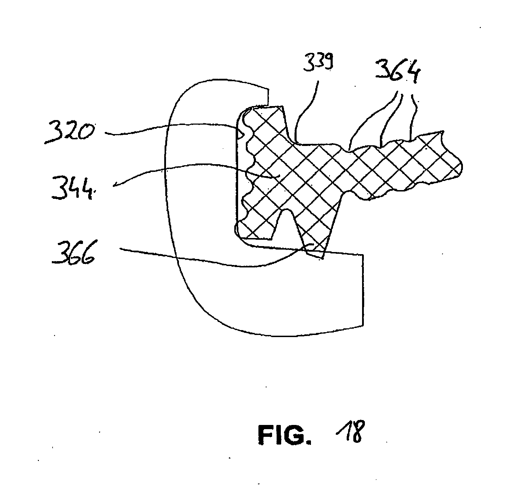

Figur 18 eine Querschnittsansicht eines Teils eines Dichtungsbalgs nach einer weiteren Ausführungsform,

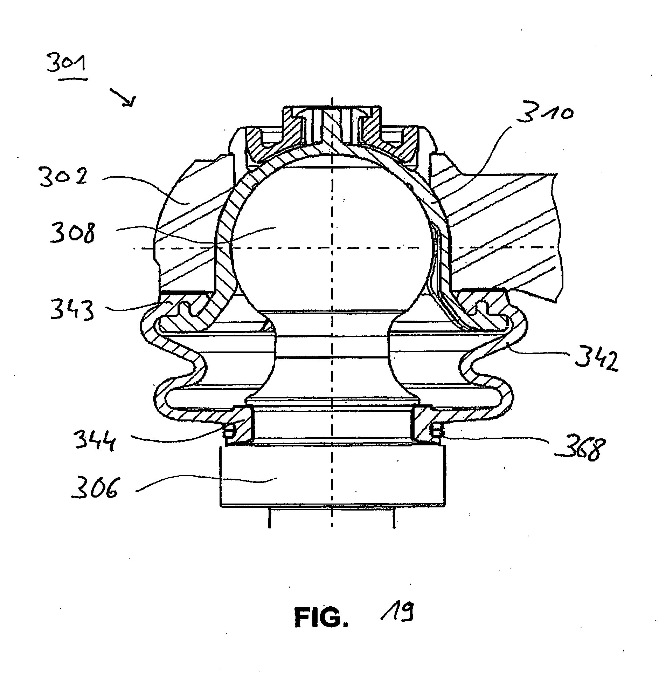

Figur 19 eine Querschnittsansicht eines Kugelgelenks mit einem Dichtungsbalg nach einer weiteren Ausführungsform,

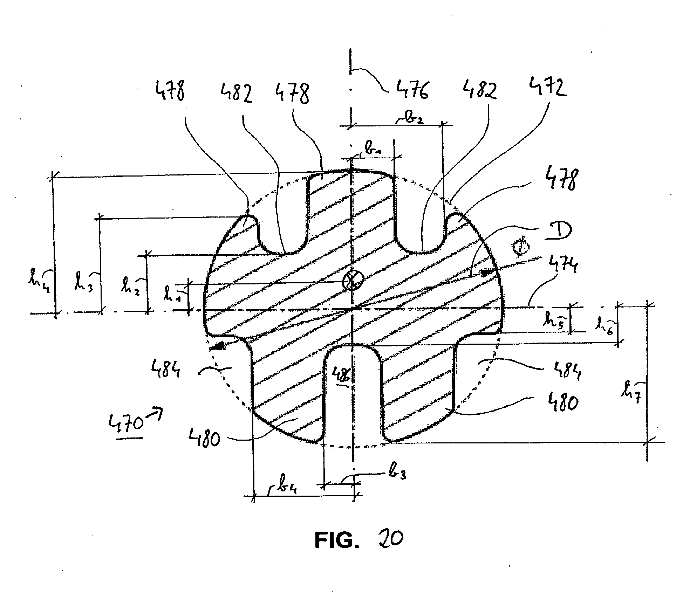

Figur 20 eine Querschnittsansicht eines Strebenkörpers in einer Ebene im Wesentlichen orthogonal zu seiner Längsachse,

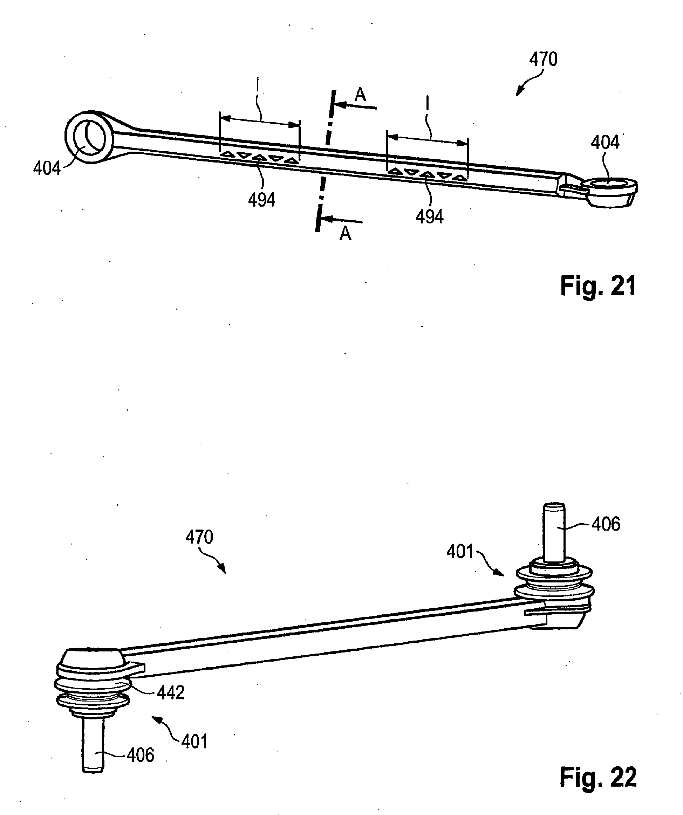

Figur 21 eine Perspektivansicht des Strebenkörpers von Figur 20,
Figur 22 eine Perspektivansicht des Strebenkörpers von Figur 21, bei dem an beiden freien Enden jeweils ein Kugelgelenk gemäß Figur 1 montiert ist,

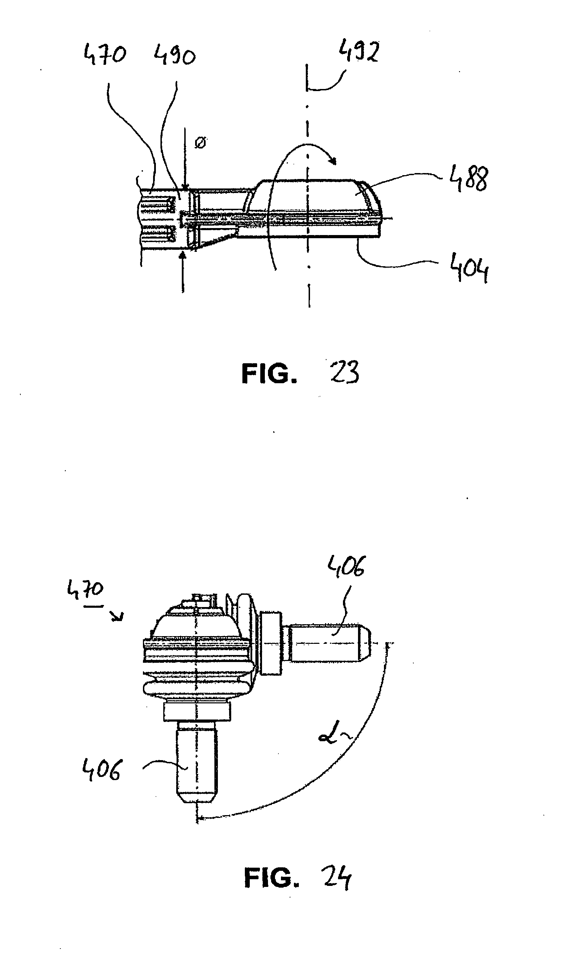

Figur 23 den Bereich I von Figur 2 in vergrößerter Darstellung,
Figur 24 den Strebenkörper von Figur 22 in einer Stirnansicht, wobei die Kugelzapfen der beiden Kugelgelenke relativ zueinander einen Winkel von 90° einschließen, und

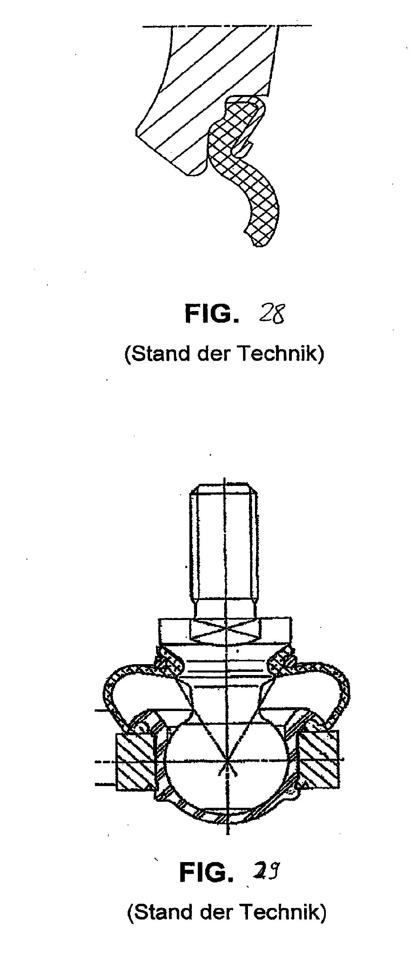

Figur 25-38 jeweils Kugelgelenke bzw. Einzelteile davon nach dem Stand der Technik.

Figur 1 zeigt ein erfindungsgemäßes Kugelgelenk 1 in vollständig montiertem Zustand, wobei nachstehend dessen wesentliche Funktionselemente im Einzelnen genannt und erläutert sind.

Das Kugelgelenk 1 umfasst ein Gehäuse 2, das eine Ausnehmung 4 in Form einer Durchgangsöffnung aufweist. Ein Kugelzapfen 6 ist mit seinem Kugelkopf 8 mittels einer Gelenkschale 10 in der Ausnehmung 4 des Gelenkgehäuses 2 eingerastet. Eine verliersichere Positionierung der Gelenkschale 10 innerhalb der Ausnehmung 4 ist durch geeignete Schnapphaken 12 sichergestellt, die mit einem Rand 3 der Ausnehmung 4 verrastet sind.

Zur Abdichtung des Kugelgelenks 1 ist ein Dichtungsbalg 42 vorgesehen, der geeignet das Eindringen von Schmutz bzw. Feuchtigkeit in das Innere des Kugelgelenks 1 verhindert. In gleicher Weise schließt der Dichtungsbalg 42 das Austreten von Schmierfett oder dergleichen aus dem Innern des Kugelgelenks 1 aus. Mittels einer an seinem oberen Rand 43 ausgebildeten Aussparung 48 in Form einer Nut ist der Dichtungsbalg 42 mit einem Halteflansch 40 der Gelenkschale 10 verbunden bzw. verknüpft. Der untere Rand des Dichtungsbalgs 42 in Form eines Balgmundes ist dichtend in Kontaktanlage mit einer Balgnut 20 des Kugelzapfens 6.

In den nachfolgenden Figuren 2-19 sind einzelne Bauelemente des Kugelgelenks 1 im Detail erläutert. Gleichen Bauelementen wie im Vergleich zu Figur 1 sind hierin gleiche Bezugszeichen zugeordnet, denen "100" bzw. ein Mehrfaches davon jeweils vorangestellt ist.

Figur 2 zeigt eine Lagervorrichtung 109 in einer perspektivischen Ansicht von oben. Die Lagervorrichtung 109 umfasst die Gelenkschale 110, die vorzugsweise aus Kunststoff hergestellt ist und in ihrem Polbereich eine geschlossene Mantelfläche aufweist. Am Randabschnitt des Polbereichs sind an der Gelenkschale 110 eine Mehrzahl von Verrastungselementen 112 in Form von Schnapphaken angeordnet. Am Polbereich selbst weist die Gelenkschale einen abragenden Befestigungsstift 114 (in Figur 2 vereinfacht gezeigt) auf, dessen Funktion nachstehend noch erläutert wird.

Die Lagervorrichtung 109 bzw. die Gelenkschale 110 dienen zur Lagerung eines Kugelzapfens in einem Gelenkgehäuse eines Kugelgelenks. In Figur 3 ist ein Teil eines solchen Kugelgelenks 101 dargestellt. Der Kugelkopf 108 des Kugelzapfens 106 ist schwenkbeweglich in der Gelenkschale 110 aufgenommen, wobei die Gelenkschale in der Ausnehmung 104 des Gelenkgehäuses 102 eingesetzt ist. Im montierten Zustand wirken die Hinterschneidungen der Schnapphaken 112 mit einem Rand 103 der Ausnehmung 104 zusammen, wodurch die Gelenkschale 110 in der Ausnehmung 104 gehalten wird.

Die Sicherung der Gelenkschale 110 innerhalb der Ausnehmung 104 des Gelenkgehäuses 102 erfolgt durch ein Sicherungselement 116, das zentrisch eine Ausnehmung 118 aufweist. Bei der in Fig. 3 gezeigten Ausführungsform ist der Befestigungsstift 114 als Schnapphaken ausgebildet. Wenn das Sicherungselement 116 auf den von außen zugänglichen Polbereich der Gelenkschale 110 aufgesetzt wird, durchdringt der Befestigungsstift 114 zunächst die Ausnehmung 118 des Sicherungselements 116, bevor seine Hinterschneidungen geeignet mit einer Rastfläche 120, die innerhalb der Ausnehmung 118 vorgesehen ist, verrastet. In dieser Weise wird das Sicherungselement 116 formschlüssig mit der Gelenkschale 110 in deren Polbereich verbunden. Der Außendurchmesser des Sicherungselements 116 ist dabei geeignet so gewählt, dass sein Außenrand an einer Innenumfangsfläche der jeweiligen Schnapphaken 112 anliegt. Dies führt dazu, dass bei montiertem Sicherungselement 116 die Schnapphaken 112 sich nicht radial nach innen bewegen können, was einen sicheren Klemmsitz mit dem Rand 103 der Ausnehmung 104 zur Folge hat. Im Ergebnis ist damit die Gelenkschale 110 wirkungsvoll innerhalb der Ausnehmung 104 positioniert und gegen ein Herauslösen gesichert.

Figur 4 zeigt eine Querschnittsansicht der Gelenkschale 110 nach einer alternativen Ausführungsform, bei der der Befestigungsstift 114' verändert in Form eines Hohlzylinders ausgebildet ist. Im ursprünglichen Zustand weist dieser Hohlzylinder einen konstanten Durchmesser auf, wobei seine axiale Länge geringfügig größer als eine axiale Höhe h der Ausnehmung 118 des Sicherungselements 116 gewählt ist. Wenn bei der Montage des Kugelgelenks 101 das Sicherungselement 116 auf den Polbereich der Gelenkschale 110 aufgesetzt wird, ragt zunächst das freie Ende des Hohlzylinders 114' aus der Ausnehmung 118 heraus. Anschließend wird dieses freie Ende durch ein Warm- oder Kaltumformen nach außen umgebördelt, so dass das Sicherungselement 118 durch den umgeformten Randbereich des Hohlzylinders 114' formschlüssig gehalten wird. Die Sicherungsfunktion des Sicherungselements 116 in Form des Anliegens seines Außenrandes an der Innenumfangsfläche der Schnapphaken 112 entspricht der Ausführungsform von Figur 3, so dass zur Vermeidung von Wiederholungen darauf verwiesen wird.

Figur 5 zeigt eine Teil-Querschnittsansicht einer weiteren Ausführungsform der Gelenkschale 110, bei der der Befestigungsstift 114" geändert in Form eines Zylinderstumpfes ausgebildet wird. Bei der Montage des Kugelgelenks 101 wird das Sicherungselement 116 auf den Polbereich der Gelenkschale 110 aufgesetzt, wobei der Zylinderstumpf 114" in Eingriff mit der Ausnehmung 118 gelangt. Das Befestigen des Sicherungselements 116 auf den Polbereich der Gelenkschale 110 erfolgt durch eine stoffschlüssige Verbindung des Zylinderstumpfes 114" mit der Innenumfangsfläche der Ausnehmung 118. Dies kann zum Beispiel mittels Ultraschallschweißen oder Kleben erfolgen. Der Kontaktbereich dieser stoffschlüssigen Verbindung zwischen dem Zylinderstumpf 114" und der Innenumfangsfläche der Ausnehmung 118 ist in Figur 5 durch schwarze dicke Linien angedeutet.

Die Verbindung des Sicherungselements 116 mit der Gelenkschale 110 kann weiter dadurch verbessert werden, dass der Außenrand des Sicherungselements 116 stoffschlüssig mit einer Innenumfangsfläche der Schnapphaken 112 verbunden wird. Auch hierzu eignet sich zum Beispiel das Ultraschallschweißen oder Kleben. Bezüglich der Ausführungsformen gemäß Figur 4 und auch Figur 3 versteht sich, dass hierbei ebenfalls eine stoffschlüssige Verbindung des Außenrandes des Sicherungselements 116 mit der Innenumfangsfläche der Schnapphaken 112 möglich ist, wodurch die Verbindung zwischen Sicherungselement 116 und Gelenkschale 110 bzw. der Lagervorrichtung 109 weiter verbessert ist.

Es versteht sich, dass für das in Figur 1 gezeigte Kugelgelenk 1 auch eine Lagervorrichtung 109 nach den Ausführungsformen gemäß Figur 4 oder Figur 5 zum Einsatz kommen kann.

Figur 6 zeigt eine Querschnittsansicht der Gelenkschale 210, die eine Öffnung 211 und einen Polkappenbereich 213 mit geschlossener Mantelfläche aufweist. Angrenzend an den Polkappenbereich 213 ist an der Gelenkschale 210 eine Mehrzahl von Verrastungselementen 212 in Form von Schnapphaken angebracht. Angrenzend an ihre Öffnung 211 umfasst die Gelenkschale 210 einen Halteflansch 240, der zweckmäßigerweise radial umlaufend ausgebildet ist. In einem Randbereich dieses Halteflansches 240 ist eine stegartige Erhebung 246 ausgebildet.

Figur 7 zeigt eine Querschnittsansicht des Dichtungsbalgs 242, der aus einem gummielastischen Material hergestellt ist. An einem oberen Rand 243 dieses Dichtungsbalgs ist innenliegend eine Aussparung 248 in Form einer Nut ausgebildet. Komplementär zu der Erhebung 246 verläuft diese Nut 248 ebenfalls radial umlaufend. Der obere Rand 243 des Dichtungsbalgs 242 ist zur Kontaktanlage mit dem Gelenkgehäuse des Kugelgelenks 1 (Fig. 1) vorgesehen. Demgegenüber dient der untere Rand 244 des Dichtungsbalgs 242 in Form eines so genannten Balgmundes dazu, dichtend an dem Kugelzapfen 206 anzuliegen, wobei dabei sowohl rotatorische Drehbewegungen des Kugelzapfens als auch Kippbewegungen des Kugelzapfens um seine Längsachse möglich sind.

Unter Verwendung der Gelenkschale 210 (Fig. 6) und des Dichtungsbalgs 242 (Fig. 7) lässt sich eine so genannte Unterbaugruppe 241 bereitstellen, indem der Dichtungsbalg 242 an dem Halteflansch 240 geeignet befestigt wird. Hierzu wird die Nut 248 mit der Erhebung 246 verknüpft. Die Unterbaugruppe, bestehend aus der Gelenkschale 210 und dem Dichtungsbalg 242, kann anschließend mit einem Kugelzapfen 206 verbunden werden, indem ein Kugelkopf 208 des Kugelzapfens 206 durch die Öffnung 211 der Gelenkschale 210 eingeführt und dadurch in die Gelenkschale 210 eingerastet wird. Abweichend hiervon ist es auch möglich, zunächst den Kugelzapfen mit seinem Kugelkopf in die Gelenkschale einzusetzen und darin zu verrasten, bevor die Gelenkschale und der Dichtungsbalg zur Bildung der Unterbaugruppe 241 miteinander verbunden werden. Bei einer Herstellung der Gelenkschale 210 aus Kunststoff ist diese ausreichend elastisch, so dass das Einrasten des Kugelkopfes 208 infolge einer geringfügigen Aufweitung bzw. Spreizung der Gelenkschale möglich ist. Figur 8 zeigt eine Querschnittsansicht einer solchen vormontierten Einheit, bei der die Unterbaugruppe, bestehend aus Gelenkschale 210 und Dichtungsbalg 242, bereits mit dem Kugelzapfen 206 verbunden ist. Es ist zu erkennen, dass der untere Rand 244 des Dichtungsbalgs 242 dichtend in Kontakt mit dem Kugelzapfen 206 ist und somit eine zuverlässige zapfenseitige Dichtung gewährleistet.

Fig. 9 zeigt den Bereich I von Figur 8 in einer vergrößerten Darstellung, nämlich die Verknüpfung der Nut 248 mit der Erhebung 246. Die Erhebung 246 ist an ihrem freien Ende ballig ausgeführt und bildet somit eine Hinterschneidung. Infolge der elastischen Eigenschaften des Dichtungsbalgs 242 lässt sich die Nut 248 ohne weiteres auf die Erhebung 246 aufbringen, so dass das ballige Ende der Erhebung 246 vollständig innerhalb der Nut 248 aufgenommen ist. Die Hinterschneidung der Erhebung 246 führt somit zu einer formschlüssigen Verbindung mit dem Dichtungsbalg 242. Im Ergebnis ist dadurch der Dichtungsbalg 242 an bzw. auf dem Halteflansch 240 sowohl axial als auch radial gesichert gehalten.

Fig. 10 zeigt prinzipiell vereinfacht weitere Varianten für eine Ausgestaltung der Erhebung 246, wobei die Varianten a-e alle einen Hinterschnitt aufweisen und somit eine formschlüssige Verbindung zwischen Dichtungsbalg und Halteflansch sowohl in axialer als auch in radialer Richtung gewährleisten. Bei der Variante gemäß f kann die Verbindung zwischen Dichtungsbalg und Halteflansch zusätzlich kraftschlüssig ausgebildet sein, zum Beispiel durch Verwendung von Klebstoff oder dergleichen, so dass auch für diese Variante eine Fixierung des Dichtungsbalgs in axialer als auch in radialer Richtung sichergestellt ist. Im Übrigen ist die Verwendung von Klebstoff oder dergleichen zur Erzielung einer ergänzenden kraftschlüssigen Verbindung zwischen dem Dichtungsbalg 242 und dem Halteflansch 240 auch für die Varianten a-e möglich.

In Fig. 9 ist zu erkennen, dass an dem Dichtungsbalg 242 an seiner Seite entgegengesetzt zur Nut 248 eine Dichtlamellenstruktur 250 ausgebildet ist. Diese Dichtlamellenstruktur 250 bildet eine Anlagefläche 252, die mit einem Gelenkgehäuse 202 bei montiertem Kugelgelenk 201 verklemmt wird, wie nachstehend noch im Detail erläutert.

Figur 11a zeigt eine Querschnittsansicht eines vollständig montierten Kugelgelenks 201 (analog zur Darstellung von Fig. 1), wobei nun die Gelenkschale 210 in die Ausnehmung 204 des Gelenkgehäuses 202 eingesetzt ist. Eine verliersichere Verrastung der Gelenkschale 210 innerhalb der Ausnehmung 204 erfolgt über die Schnapphaken 212, die mit einem Randbereich 203 der Ausnehmung 204 verrasten. Die axiale Höhe der Gelenkschale 210 ist dabei geeignet so bemessen, dass im eingebauten Zustand die Dichtlamellenstruktur 250 des Dichtungsbalgs 242 von unten gegen das Gelenkgehäuse 202 gepresst wird. Hieraus resultiert in Verbindung mit der Verknüpfung der Nut 248 auf der Erhebung 246 eine besonders große Dichtigkeit des Dichtungsbalgs 242 an seinem oberen Rand 243 bzw. der gehäuseseitigen Dichtung.

Der Montageprozess für das in Figur 11a (bzw. Fig. 1) gezeigte Kugelgelenk 201 erfolgt in der Weise, dass zunächst die Unterbaugruppe, bestehend aus dem Dichtungsbalg 242 und der Gelenkschale 210, durch die formschlüssige und/oder kraftschlüssige Verbindung dieser beiden Elemente gebildet wird. In einem nächsten Schritt wird dann der Kugelzapfen 206 in die Gelenkschale 210 eingeführt und darin verrastet (vgl. Figur 8). Wie bereits vorstehend erläutert, kann der Kugelzapfen vor oder auch nach Bildung der Unterbaugruppe, die aus der Gelenkschale und dem Dichtungsbalg besteht, mit seinem Kugelkopf in die Gelenkschale eingesetzt und mit ihr verrastet werden, um dadurch die genannte vormontierte Einheit zu bilden. Anschließend wird in einem letzten Schritt die vormontierte Einheit, bestehend aus Kugelzapfen, Gelenkschale und Dichtungsbalg, mit dem Gelenkgehäuse 202 verbunden, indem die Gelenkschale 210 in die Ausnehmung 204 des Gelenkgehäuses 202 eingeführt und wie vorstehend erläutert darin verrastet wird.

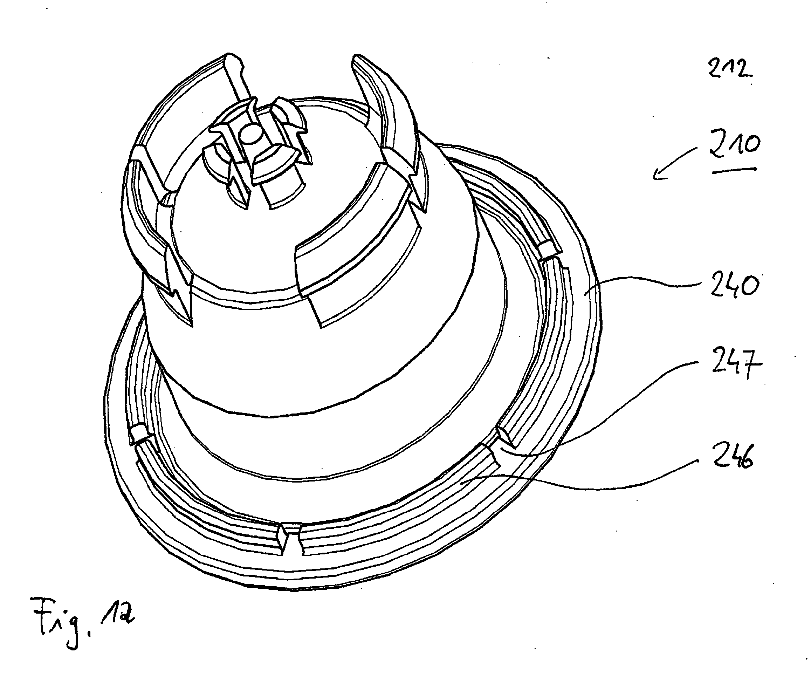

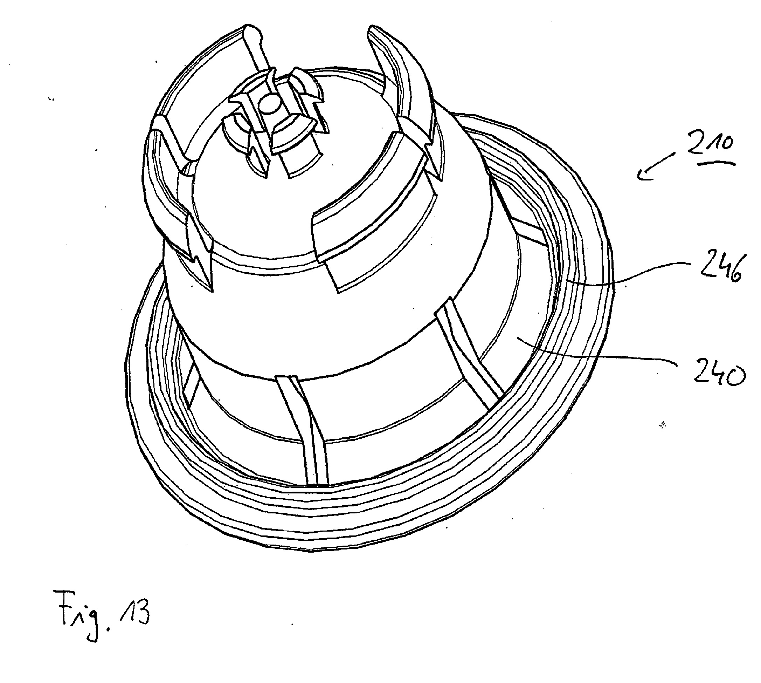

In den Fig. 11-13 sind alternative Ausführungsformen für die Gelenkschale 210 jeweils in einer Perspektivansicht gezeigt, in Abwandlung zu der in Fig. 6 gezeigten Ausführungsform. Bei der Variante gemäß Fig. 11 sind sowohl der Halteflansch 240 als auch die Erhebung 246 segmentartig bzw. geschlitzt ausgebildet, was zu einer verbesserten Elastizität der Gelenkschale beim Verrasten mit dem Kugelkopf 206 führt und zu Vereinfachung der Herstellung in Folge einer verbesserten Entformbarkeit aus dem Werkzeug führt. Bei der Variante von Fig. 12 ist lediglich die Erhebung 246 segmentartig mit dazwischen liegenden Spalten 247 ausgebildet. Bei der Variante von Fig. 13 ist ausschließlich der Halteflansch 240 mit einem daran angrenzenden unteren Bereich der Gelenkschale 210 geschlitzt ausgebildet sind, wobei die Erhebung 246 radial umlaufend ausgebildet ist.

Figur 14 zeigt eine Querschnittsansicht eines Dichtungsbalgs 342, der zum Einsatz bei dem Kugelgelenk 1 von Fig. 1 bzw. dem Kugelgelenk 201 von Fig. 11a vorgesehen ist. Der Dichtungsbalg 342 weist einen oberen Rand 343 und einen unteren Rand 344 in Form eines so genannten Balgmundes auf. Der Dichtungsbalg 342 umfasst einen Balgkörper 360, der sich zwischen dem oberen Rand 343 und dem Balgmund 344 erstreckt. Der obere Rand 343 erfüllt den Zweck einer gehäuseseitigen Dichtung und liegt bei einem montierten Kugelgelenk entsprechend am Gelenkgehäuse an. Der Balgmund 344 erfüllt den Zweck einer zapfenseitigen Dichtung und liegt entsprechend dichtend an einem Kugelzapfen an.

Der Balgmund 344 weist eine Innenumfangsfläche 362 auf, die konkav ausgebildet ist. Figur 15 zeigt den Bereich I von Figur 14 in einer vergrößerten Darstellung. Hierin ist der Balgmund 344 mit seiner konkaven Innenumfangsfläche 362 im unbelasteten Zustand dargestellt. In Figur 15 ist zusätzlich prinzipiell vereinfacht ein Teil eines Kugelzapfens 306 mit einer Balgnut 320 gezeigt, wobei der Balgmund 344 in diese Balgnut 320 eingesetzt ist. Wenn der Dichtungsbalg 342 in dem Kugelgelenk montiert ist, legt sich die Innenumfangsfläche 362 vollständig an die gerade Fläche der Balgnut 320 an. Hierbei entwickelt der Balgmund 344 durch seine konkave Kontaktgeometrie eine Federwirkung. Dies hat zur Folge, dass Zug- oder Druckkräfte im Balgkörper, die bei großen Bewegungswinkeln eines Kugelzapfens entstehen können, ausgeglichen werden, woraus eine gleichmäßige Anpresskraft und Dichtleistung über eine axiale Höhe des Balgmundes 344 bzw. über seine Innenumfangsfläche 362 gewährleistet sind.

Die Darstellung von Figur 15 verdeutlicht, dass der Balgkörper 360 mit dem Balgmund 344 derart verbunden ist, dass ein Übergangsbereich 339 zwischen dem Balgkörper 360 und dem Balgmund 344 eine Querschnittsverminderung aufweist. Diese Verminderung des Querschnitts ist dadurch gegeben, dass der Verbindungsabschnitt zwischen Balgkörper 360 und Balgmund 344 eine geringere Erstreckung s aufweist als die axiale Höhe h des Balgmundes 344. Hierdurch ist sichergestellt, dass Zugkräfte oder Druckkräfte, die bei großen Verschwenkwinkeln des Kugelzapfens 306 bezüglich einer Längsachse 392 des Kugelgelenks 301 in dem Balgkörper 360 entstehen, von dem Balgmund 344 weitestgehend ferngehalten werden. Im Ergebnis bleibt die Anpresskraft des Balgmundes an dem Kugelzapfen 306 über die Höhe der Innenumfangsfläche 362 gleichmäßig erhalten. Hierdurch wird ein einseitiges Ablösen der Innenumfangsfläche 362 von der Balgnut 320 verhindert.

Diese vorstehend erläuterte Verminderung der Kraft- und Bewegungsübertragung zwischen Balgkörper und Balgmund wird weiter dadurch verbessert, indem der Balgkörper 360 an dem Balgmund 344 im Wesentlichen im Bereich dessen axialer Mitte angebracht ist. Eine noch weitere Verbesserung wird dadurch erzielt, dass der Balgkörper zumindest eine Einkerbung 364 aufweist. Die in Figur 15 gezeigte Einkerbung 364 ist radial umlaufend in Form einer Nut ausgebildet. Alternativ ist es auch möglich, diese Einkerbung nur an einer Seite des Balgkörpers 360 vorzusehen.

Der Dichtungsbalg 342 ermöglicht eine Anbringung an dem Kugelzapfen 306 auch ohne das Vorsehen eines Spannrings. Die Überlagerung der verschiedenen genannten Merkmale des Dichtungsbalgs 342, nämlich Federwirkung der konkaven Innenumfangsfläche 362 und die Verminderung der Kraft- und Bewegungsübertragung zwischen Balgkörper 360 und Balgmund 344 gewährleisten einen ausreichenden Anpressdruck für den Balgmund 344, auch wenn das Kugelgelenk 1 (Fig. 1) großen Bewegungswinkeln unterliegt.

In Figur 16 ist eine Querschnittsansicht eines Teils eines Dichtungsbalgs 342 mit einer axialen Falte gezeigt. Die axiale Falte wird durch mehrere in radialer Richtung verlaufende Segmente des Balgkörpers 360 erzeugt, die eine unterschiedliche axiale Höhe aufweisen.

Figur 17 zeigt eine Querschnittsansicht des Bereichs II von Figur 16. Hierin ist zu erkennen, dass der Balgkörper 360 angrenzend an den Balgmund 344 infolge der axialen Falte (Fig. 16) mit der Längsachse 392 des Kugelgelenks einen kleineren Winkel einschließt als die Ausführungsform von Figur 15. Jedoch ist auch bei der Ausführungsform von Figur 17 infolge der Verbindung zwischen dem Balgkörper 360 und Balgmund 344, die in dem Übergangsbereich 339 zwischen diesen beiden Elementen eine Querschnittsverminderung aufweist, die vorstehend erläuterte Verminderung der Kraft- und Bewegungsübertragung gewährleistet. In gleicher Weise wie in Fig. 15 ist in Fig. 17 der Balgmund 344 mit seiner ursprünglich konkaven Innenumfangsfläche 362 gezeigt, die sich bei fertig montiertem Kugelgelenk gerade an die Balgnut 320 anlegt.

Zur Verbesserung der Verminderung der Kraft- und Bewegungsübertragung zwischen Balgkörper und Balgmund können in dem Balgkörper 360 mehrere Einkerbungen 364 hintereinander ausgebildet sein, wobei die Einkerbungen 364 angrenzend zueinander in einer Reihe angeordnet sind. Figur 18 zeigt eine Querschnittsansicht eines unteren Bereichs des Balgkörpers 360, der an den Balgmund 344 angrenzt. Bei dieser Ausführungsform sind drei Einkerbungen vorgesehen. Es versteht sich, dass bei einer Mehrzahl von Einkerbungen deren Anzahl nicht auf drei beschränkt ist, sondern auch mehr oder weniger betragen kann.

Der Dichtungsbalg 342 weist sowohl bei der Ausführungsform gemäß Figur 15 als auch bei der Ausführungsform gemäß Figur 18 eine Abstreiflippe 366 auf, die radial außerhalb des Übergangsbereichs 339 zwischen dem Balgkörper 360 und dem Balgmund 344 ausgebildet ist. Die Abstreiflippe 366 bildet eine axiale Erweiterung des Balgkörpers 360, wobei sie mit einem Randbereich der Balgnut 320 in Kontakt ist. Die Abstreiflippe 366 schützt das Kugelgelenk 301 vor dem Eindringen von Schmutz und/oder Feuchtigkeit.

Fig. 19 zeigt das Kugelgelenk 301 mit einer weiteren Ausführungsform des Dichtungsbalgs 342, wobei zur zusätzlichen Fixierung des Balgmundes 344 in der Balgnut 320 ein Spannring 368 zum Einsatz kommt. Auch in Gegenwart eines solchen Spannrings 368 bleiben jedoch die Eigenschaften bzw. Merkmale des Dichtungsbalgs 342 gemäß der vorstehend erläuterten Ausführungsformen unverändert erhalten.

In den Figuren 20-24 ist ein Strebenkörper 470 in Verbindung mit Einzelheiten davon gezeigt, mittels dessen sich zwei Kugelgelenke 1 zu einem System von Kugelgelenken zusammenfassen bzw. verbinden lassen. Anders ausgedrückt, sind an den jeweiligen Enden eines solchen Strebenkörpers 470 jeweils ein Kugelgelenk gemäß der vorstehend erläuterten Ausführungsformen angebracht.

In Fig. 20 und Fig. 21 ist der Strebenkörper 470 gezeigt, wobei die Figur 21 eine Perspektivansicht und die Figur 20 eine Querschnittsansicht entlang der Linie A-A von Figur 21 darstellen.

Der Strebenkörper 470 hat einen Profilquerschnitt, der innerhalb eines Hüllkreises 472 mit dem Durchmesser D (Figur 20) angeordnet ist. Der Strebenkörper 470 weist eine Horizontalachse 474 und eine Vertikalachse 476 auf. Oberhalb der Horizontalachse 474 sind drei Erhebungen 478 ausgebildet, wobei unterhalb der Horizontalachse zwei Erhebungen 480 ausgebildet sind. Der Strebenkörper 470 ist bezüglich seiner Vertikalachse 476 symmetrisch ausgebildet, wobei sein Flächenschwerpunkt S oberhalb der Horizontalachse 474 liegt und davon um die Strecke h₁ beabstandet ist.

Der Strebenkörper 470 ist bezüglich seines Profilquerschnitts durch die jeweiligen Abmessungen der einzelnen Erhebungen 478, 480 und der dazwischen ausgebildeten Profilsenken 482, 484 und 486 charakterisiert. Die Abmessungen dieser Erhebungen und Profilsenken sind in Figur 1 durch die Strecken h₂-h₇ bzw. b₁-b₄ definiert. Je nach Einsatzzweck des Strebenkörpers 470 bzw. eines eintretenden Lastfalls können die Höhen h₁-h₇ bzw. Breiten b₁-b₄ der Erhebungen konstant oder veränderlich entlang einer Länge des Strebenkörpers 470 ausgeführt sein.

Figur 22 zeigt den Strebenkörper 470 von Figur 21, wenn an beiden Enden jeweils ein Kugelgelenk 401 montiert ist. Ein solches Kugelgelenk 401 besteht üblicherweise aus einem Kugelzapfen 406, einem Dichtungsbalg 442 und einer (nicht erkennbaren) Gelenkschale. An den beiden Enden des Strebenkörpers 470 ist jeweils eine Ausnehmung 404 in Form einer Durchgangsöffnung ausgebildet. Die Gelenkschale, innerhalb derer der Kugelzapfen 306 schwenkbeweglich aufgenommen ist, wird für eine Vervollständigung der in Figur 22 gezeigten montierten Stabilisatorstrebe in die jeweiligen Durchgangsöffnungen 404 des Strebenkörpers 470 eingesetzt und verliersicher darin verrastet.

Figur 23 zeigt einen Endabschnitt des Strebenkörpers 470 gemäß des Bereichs I von Fig. 22 in vergrößerter Darstellung. Die Durchgangsöffnung 404 bildet hierbei einen Anbindungsbereich 488 zur Aufnahme eines Kugelgelenks 301. Zwischen dem Anbindungsbereich 488 und einem daran angrenzenden Randbereich des Strebenkörpers 470 ist ein Übergangsbereich 490 vorgesehen, der zylindrisch ausgebildet ist. Aufgrund dieses zylindrischen Abschnitts kann der Anbindungsbereich 488, d.h. die Durchgangsöffnung 404, mit ihrer in Längsrichtung der Öffnung verlaufenden Achse 492 in einem definierten Winkel bezüglich des Strebenkörpers 470 unter Berücksichtigung seiner Entformungsrichtung angeordnet werden.

Der Strebenkörper ist zur weiteren Verbesserung seiner Steifigkeit an seiner Aussenfläche an seinen Profilsenken durch Rippen 494 ausgesteift, die jeweils über einen Längenabschnitt I an ausgebildet sind.

Figur 24 zeigt eine Draufsicht auf eine Stirnseite des Strebenkörpers 470, wenn die beiden Kugelzapfen 406 der jeweiligen Kugelgelenke 401 mit ihrer Längsachse relativ zueinander einen Winkel von 90° einschließen. In Bezug auf die in Figur 22 gezeigte Ausführungsform gilt, dass die beiden Kugelzapfen 406 relativ zueinander einen Winkel von 180° einschließen. Im Allgemeinen gilt, dass durch eine geeignete Ausbildung des Übergangsbereichs 490 bei der Herstellung des Strebenkörpers 470 für die Anbindungsbereiche 488 an den beiden Enden des Strebenkörpers 470 alle relativen Winkel-Orientierungen in einem Bereich von 0° bis 180° möglich sind, so dass die Kugelzapfen von daran montierten Kugelgelenken einen Winkel relativ zueinander in dem genannten Bereich einschließen. Entsprechend ist eine vielfältige Anwendung des Strebenkörpers 470 im Fahrwerksbereich oder vergleichbaren Gebieten gewährleistet.

In Bezug auf den Strebenkörper 470 versteht sich, dass ein solches Strukturelement im Allgemeinen zur Verbindung von zwei Punkten geeignet ist. Anders ausgedrückt, ist die Verwendung eines solchen Strebenkörpers auch ohne Kugelgelenke möglich, wobei für diesen Fall an den beiden Enden des Strebenkörpers jeweils andere Körper vorgesehen sind, die durch den Strebenkörper mechanisch miteinander verbunden sind.

## Patentansprüche

1. Kugelgelenk, umfassend
ein Gelenkgehäuse (102), das eine Ausnehmung (104) aufweist,
einen Kugelzapfen (106) mit einem Kugelkopf (108),
einen Dichtungsbalg (342) mit einem gehäuseseitigen Dichtungssitz (343) und einem zapfenseitigen Dichtungssitz in Form eines Balgmunds (344), der in Kontakt mit dem Kugelzapfen (306) steht, wobei ein Balgkörper (360) des Dichtungsbalgs sich zwischen dem gehäuseseitigen Dichtungssitz (343) und dem Balgmund (344) erstreckt, und
eine Gelenkschale, wobei der Kugelkopf (108) schwenkbeweglich innerhalb der Gelenkschale (210) aufgenommen und die Gelenkschale (210) in der Ausnehmung (104) des Gelenkgehäuses (102) eingesetzt ist,
wobei die Gelenkschale (210) einen Halteflansch (240) aufweist und der Dichtungsbalg (242) an dem Halteflansch (240) formschlüssig befestigt ist, wobei an dem Halteflansch (240) eine Erhebung (246) und in einem Randbereich des Dichtungsbalgs (242) eine Aussparung (248) ausgebildet sind, und wobei die Aussparung (248) des Dichtungsbalgs (242) und die Erhebung (246) des Halteflansches (240) miteinander verknüpft sind, wobei die Erhebung (246) eine Hinterschneidung aufweist.

2. Kugelgelenk nach Anspruch 1, bei dem der Halteflansch (240) radial umlaufend oder in Segmenten ausgebildet ist.

3. Kugelgelenk nach Anspruch 1 oder 2, bei dem der Dichtungsbalg (242) an dem Halteflansch (240) zusätzlich kraftschlüssig befestigt ist.

4. Kugelgelenk nach einem der vorhergehenden Ansprüche, bei dem die Hinterschneidung kugelig, ballig oder winklig ausgeführt ist.

5. Kugelgelenk nach einem der vorhergehenden Ansprüche, bei dem der Dichtungsbalg (242) an einer Seite entgegengesetzt zur Aussparung (248) eine an dem Gelenkgehäuse (202) anliegende Anlagefläche (252) aufweist, an der eine Dichtlamellenstruktur (250) ausgebildet ist.

6. Kugelgelenk nach einem der vorhergehenden Ansprüche, mit zumindest einem Verrastungselement (112), das an einer dem Kugelkopf (108) entgegengesetzten Außenseite der Gelenkschale (110) angeordnet ist und mit einem Rand der Ausnehmung (104) des Gelenkgehäuses (102) zusammenwirkt, und mit
einem Sicherungselement (116), das im montierten Zustand des Kugelgelenks (101) in Kontakt mit einer Innenumfangsfläche des Verrastungselements (112) ist, so dass dadurch das Verrastungselement (112) in Eingriff mit dem Rand der Ausnehmung (104) des Gelenkgehäuses (102) gehalten und die Gelenkschale (110) gegen ein Verlieren aus der Ausnehmung (104) des Gelenkgehäuses (102) gesichert ist, wobei das Sicherungselement (116) mit der Gelenkschale (110) in deren Polbereich verbunden ist.

7. Kugelgelenk nach Anspruch 6, bei dem die Verbindung des Sicherungselements (116) mit der Gelenkschale (110) formschlüssig und/oder stoffschlüssig erfolgt.

8. Kugelgelenk nach einem der vorhergehenden Ansprüche, bei dem die Gelenkschale (110) einstückig aus Kunststoff hergestellt ist.

9. Kugelgelenk nach einem der vorhergehenden Ansprüche, bei dem die Gelenkschale (110) eine geschlossene Mantelfläche aufweist.

10. Kugelgelenk nach Anspruch 9 soweit er auf Anspruch 6 rückbezogen ist, bei dem die geschlossene Mantelfläche im Polbereich vorgesehen ist, in dem die Gelenkschale (110) mit dem Sicherungselement (116) verbunden ist.

11. Kugelgelenk nach einem der Ansprüche 2 bis 5, bei dem das Sicherungselement (116) eine zentrische Ausnehmung (118), insbesondere in Form einer Durchgangsöffnung aufweist.

12. Kugelgelenk nach einem der Ansprüche 6 bis 11, bei dem ein Außenrand des Sicherungselements (116) mit der Innenumfangsfläche des Verrastungselements (112) stoffschlüssig verbunden ist.

13. Kugelgelenk nach einem der Ansprüche 6 bis 12, bei dem das Sicherungselement (116) als Polkappe ausgebildet ist.

## Claims

1. A ball joint, comprising
a joint housing (102) having a recess (104),
a ball stud (106) having a ball head (108),
a sealing bellows (342) having a sealing seat (343) on the housing side and a sealing seat on the stud side in the form of a bellows mouth (344) which is in contact with the ball stud (306), a bellows body (360) of the sealing bellows extending between the sealing seat (343) on the housing side and the bellows mouth (344), and
a joint socket, the ball head (108) being accommodated for swiveling motion within the joint socket (210), and the joint socket (210) being inserted in the recess (104) of the joint housing (102),
the joint socket (210) including a holding flange (240), and the sealing bellows (242) being fastened to the holding flange (240) with an interlocking fit, a raised portion (246) being formed on the holding flange (240) and a recess (248) being formed in an edge portion of the sealing bellows (242), and the recess (248) of the sealing bellows (242) and the raised portion (246) of the holding flange (240) being linked with each other, the raised portion (246) having an undercut.

2. The ball joint according to claim 1, in which the holding flange (240) is formed so as to be radially surrounding or in segments.

3. The ball joint according to claim 1 or 2, in which the sealing bellows (242) is additionally fastened to the holding flange (240) with a force fit.

4. The ball joint according to any of the preceding claims, in which the undercut is of a spherical, crowned or angled shape.

5. The ball joint according to any of the preceding claims, in which on a side opposite to the recess (248), the sealing bellows (242) includes a contact surface (252) that is in contact with the joint housing (202) and has a sealing rib structure (250) formed thereon.

6. The ball joint according to any of the preceding claims, comprising at least one locking member (112) which is arranged on an outside of the joint socket (110) opposite to the ball head (108) and cooperates with a rim of the recess (104) of the joint housing (102), and comprising
a retaining member (116) which, in the assembled condition of the ball joint (101), is in contact with an inner circumferential surface of the locking member (112) so that the locking member (112) is thereby held in engagement with the rim of the recess (104) of the joint housing (102) and the joint socket (110) is captively secured in the recess (104) of the joint housing (102), the retaining member (116) being connected with the joint socket (110) in the pole portion thereof.

7. The ball joint according to claim 6, in which the retaining member (116) is connected with the joint socket (110) with an interlocking fit and/or by a substance-to-substance bond.

8. The ball joint according to any of the preceding claims, in which the joint socket (110) is manufactured from plastic in one piece.

9. The ball joint according to any of the preceding claims, in which the joint socket (110) has a closed shell surface.

10. The ball joint according to claim 9, as far as dependent on claim 6, in which the closed shell surface is provided in the pole portion in which the joint socket (110) is connected with the retaining member (116).

11. The ball joint according to any of claims 2 to 5, in which the retaining member (116) has a central recess (118), in particular in the form of a passage opening.

12. The ball joint according to any of claims 6 to 11, in which an outer edge of the retaining member (116) is connected with the inner circumferential surface of the locking member (112) by a substance-to-substance bond.

13. The ball joint according to any of claims 6 to 12, in which the retaining member (116) is formed as a pole cap.

## Revendications

1. Joint sphérique, comprenant
un boîtier de joint (102) qui présente un évidement (104),
un pivot sphérique (106) qui présente une tête sphérique (108),
un soufflet d'étanchéité (342) qui présente un siège d'étanchéité (343) côté boîtier et un siège d'étanchéité côté pivot en forme d'embouchure de soufflet (344) qui est en contact avec le pivot sphérique (306), un corps de soufflet (360) du soufflet d'étanchéité s'étendant entre le siège d'étanchéité (343) côté boîtier et l'embouchure de soufflet (344),
une coquille de joint, la tête sphérique (108) étant reçue à pivotement à l'intérieur de la coquille de joint (210), et la coquille de joint (210) étant agencée dans l'évidement (104) du boîtier de joint (102),
la coquille de joint (210) présentant une bride de retenue (240), et le soufflet d'étanchéité (242) étant fixé sur la bride de retenue (240) par coopération de formes, un bossage (246) étant réalisé sur la bride de retenue (240) et un creux (248) étant réalisé dans une zone de bord du soufflet d'étanchéité (242), et le creux (248) du soufflet d'étanchéité (242) et le bossage (246) de la bride de retenue (240) étant reliés l'un à l'autre, le bossage (246) présentant une contredépouille.

2. Joint sphérique selon la revendication 1, dans lequel la bride de retenue (240) est réalisée de manière radialement périphérique ou en segments.

3. Joint sphérique selon la revendication 1 ou 2, dans lequel le joint d'étanchéité (242) est en plus fixé sur la bride de retenue (240) par coopération de forces.

4. Joint sphérique selon l'une des revendications précédentes, dans lequel la contredépouille est réalisée de manière sphérique, bombée ou angulaire.

5. Joint sphérique selon l'une des revendications précédentes, dans lequel le soufflet d'étanchéité (242) présente d'un côté opposé au creux (248) une surface d'appui (252) qui repose sur le boîtier de joint (202) et sur laquelle une structure de lamelle d'étanchéité (250) est réalisée.

6. Joint sphérique selon l'une des revendications précédentes, comportant au moins un élément d'enclenchement (112) qui est agencé sur une face extérieure de la coquille de joint (110) opposée à la tête sphérique (108) et qui coopère avec un bord de l'évidement (104) du boîtier de joint (102), et comportant
un élément d'arrêt (116) qui, à l'état monté du joint sphérique (101), est en contact avec une surface périphérique intérieure de l'élément d'enclenchement (112), de sorte que l'élément d'enclenchement (112) est ainsi retenu en engagement avec le bord de l'évidement (104) du boîtier de joint (102) et la coquille de joint (110) est bloquée contre une perte hors de l'évidement (104) du boîtier de joint (102), l'élément d'arrêt (116) étant relié à la coquille de joint (110) dans la zone polaire de celle-ci.

7. Joint sphérique selon la revendication 6, dans lequel le raccordement de l'élément d'arrêt (116) à la coquille de joint (110) est réalisé par coopération de formes et/ou par coopération de matières.

8. Joint sphérique selon l'une des revendications précédentes, dans lequel la coquille de joint (110) est fabriquée d'un seul tenant en matière plastique.

9. Joint sphérique selon l'une des revendications précédentes, dans lequel la coquille de joint (110) présente une surface enveloppante fermée.

10. Joint sphérique selon la revendication 9 dans la mesure où elle dépend de la revendication 6, dans lequel la surface enveloppante fermée est prévue dans la zone polaire dans laquelle la coquille de joint (110) est reliée à l'élément d'arrêt (116).

11. Joint sphérique selon l'une des revendications 2 à 5, dans lequel l'élément d'arrêt (116) présente un évidement central (118), en particulier sous forme d'orifice de passage.

12. Joint sphérique selon l'une des revendications 6 à 11, dans lequel un bord extérieur de l'élément d'arrêt (116) est relié à la surface périphérique intérieure de l'élément d'enclenchement (112) par coopération de matières.

13. Joint sphérique selon l'une des revendications 6 à 12, dans lequel l'élément d'arrêt (116) est réalisé sous forme de coiffe polaire.
